# EUROPEAN PATENT APPLICATION

(11) **EP 1 538 543 A1**
(43) Date of publication of application: **08.06.2005**
(21) Application number: 03795393.2
(22) Date of filing: 11.09.2003
(51) Int. Cl.: G06F 17/60

(54) **LICENSE MANAGEMENT DEVICE, LICENSE MANAGEMENT METHOD, AND COMPUTER PROGRAM**

(30) Priority: 11.09.2002 JP 2002265418
(71) Applicant: Sony Corporation, Tokyo 141-0001 (JP)
(72) Inventor: NAGAI, Norihiro, c/o SONY CORPORATION, Tokyo 141-0001 (JP); KURIHARA, Akira, c/o SONY CORPORATION, Tokyo 141-0001 (JP); KITAYA, Yoshimichi, c/o SONY CORPORATION, Tokyo 141-0001 (JP); OSAWA, Yoshitomo, c/o SONY CORPORATION, Tokyo 141-0001 (JP); URANO, Naomi, c/o SONY CORPORATION, Tokyo 141-0001 (JP); MORITA, M., c/o SONY MUSIC ENTERTAIN. (JAPAN) INC., Tokyo 102-8353 (JP); FUKUI, T., c/o SONY MUSIC ENTERTAIN. (JAPAN) INC., Tokyo 102-8353 (JP)
(74) Representative: DeVile, Jonathan Mark, Dr.
(86) International application number: PCT/JP2003/011617
(87) International publication number: WO 2004/025533

(57) **Abstract**

To provide an information recording medium and an information processing apparatus and method in which the content usage by ensuring copyright protection can be implemented both in CD players and information processing apparatuses, for example, PCs. A license providing condition for a client can be dynamically set based on the content usage status of the client. For example, for clients having a large number of content usages, the license price is decreased, or the license can be provided free. A media ID stored in, for example, a CD, and a product ID as an identifier in, for example, a title unit or an album unit are received from the client. Based on such identification data, the content usage status data can be checked. Accordingly, the licenses can be provided under the reliable management of the content usage.

## Description

### Technical Field

The present invention relates to license management apparatuses, license management methods, and computer programs. More particularly, the invention relates to a license management apparatus, a license management method, and a computer program in which license providing conditions are changed according to the content or license usage or purchase status of clients so as to implement the usage of content and the provision of licenses under different conditions for the clients.

### Background Art

These days, various types of software data, for example, audio data such as music, image data such as movies, game programs, and various application programs (hereinafter referred to as "content") are distributed via networks, for example, the Internet, or via recording media, for example, DVDs and CDs. The distributed content is played back and used by PCs (personal computers), playback devices, for example, CD players and DVD players, or game machines owned by users.

Generally, for many items of content, for example, music data and image data, creators or sellers of the content hold the distribution right of the content. Accordingly, in order to play back or use normal content other than free distribution content, it is necessary to obtain an authorized content usage right. For a CD, for example, a CD can be played back with a player by paying a price equivalent to the CD.

When receiving content via a network, for example, the Internet, by using a PC or a communication terminal, the user has to pay a content provider for the usage of content, for example, by inputting user information such as a user's credit number, and under this condition, the provider provides the content to the user.

Even if the user pays for, for example, content, however, he/she can record (copy) the content of a CD on another recording medium, or read the content from the CD as digital data and store it as a computer file of a PC. If such processing, so-called "ripping", is allowed, unauthorized copy data is widespread.

Ripping performed in a PC is to copy data as digital data, and the quality of the original data can be maintained. If ripping data is written into, for example, another CD-R, a content CD having exactly the same quality as that of the original CD is created. Ripping data can also be recorded as compressed data, for example, MP3 data, or can be transmitted via a network.

As described above, the circumstance in which content provided with a copyright is illegally copied, tampered with, or distributed after being delivered to a user is not desirable in terms of copyright protection.

As a copyright protection technique for preventing such a circumstance, information recording media provided with a copy control function (for example, CDs having a copy prevention function) have been invented. As the copy prevention function, the copy control technique developed by Midbar Technology Ltd. and the copy control technique developed by Macrovision Corporation are available.

The structure of the copy control techniques is, for example, as follows. A pseudo signal is input into the first track of a CD, and when the CD is set in a CD-ROM drive, the PC cannot recognize the CD as a music CD, thereby preventing the PC from playing back the CD by using a CD player program. A normal CD player, which cannot execute ripping processing, can play back only the content data by ignoring the pseudo signal.

Thus, when playing back an information recording medium, for example, a CD, on which copy-controlled content is recorded, data cannot be played back in a PC although it can be played back with a playback-dedicated CD player, as stated above. This is effective in eliminating unauthorized processing, for example, copying and ripping. It is, however, inconvenient for authorized users who do not intend to perform unauthorized copying or ripping.

Accordingly, the following structure has been proposed. Content used in machines, such as PCs, or content distributed via a network is subjected to encryption processing without providing a copy control function, and is distributed to authorized users only under the condition that the users pay for the right (license) of using the content. In this structure, a user obtains, for example, encrypted content and also purchases usage right data so as to obtain a key (content key) for decrypting the encrypted content based on key data extracted from the usage right data, thereby making it possible to use the content.

In known license distribution processing, however, the conditions for providing licenses are fixed. For example, even when a license for the right of using a certain item of content was obtained in the past, the user must pay the same fee as paid before for the same content if he/she wishes to obtain a license again. Accordingly, depending on the content usage status, obtaining a usage right of content distributed via a network or stored in an information recording medium by a license sometimes becomes more expensive than purchasing an information recording medium, for example, a CD, storing the content.

### Disclosure of Invention

In view of the above-described problems, it is an object of the present invention to provide a license management apparatus, a license management method, and a computer program in which license providing conditions are changed according to the content or license usage or purchase status of clients so as to implement the usage of content and the provision of licenses under different conditions for the clients.

A first aspect of the present invention is a license management apparatus for setting a condition for providing a license as a content usage right, including: a disk table in which data indicating content usage statuses of clients is stored; an album price master table in which information concerning license providing conditions according to the content usage statuses is stored; and license providing condition determining means for obtaining information concerning a content usage of a client from the disk table based on identification data accompanying a license obtaining request received from the client, and for obtaining information concerning a license providing condition from the album price master table based on the content usage information so as to determine the license providing condition for the client based on the information concerning the license providing condition.

In one mode of the license management apparatus of the present invention, the license obtaining request received from the client is a request to obtain a license corresponding to a usage right of content stored in an information recording medium, and the identification data accompanying the license obtaining request is a combination of a media ID, stored in the information recording medium, as an identifier unique to the information recording medium and a product ID as an identifier set for each product corresponding to a group of a plurality of information recording media, and the disk table stores the content usage status data corresponding to the media ID and the product ID.

In one mode of the license management apparatus of the present invention, the information concerning the license providing conditions is information concerning license providing prices, and the album price master table stores the information concerning the license providing prices according to the content usage statuses.

In one mode of the license management apparatus of the present invention, the information concerning the license providing conditions is information concerning license providing prices, the content usage status is the number of purchases as the number of purchases obtained for the content, the disk table stores data indicating the number of content purchases as the content usage status data corresponding to the media ID and the product ID, the album price master table stores the information concerning the license providing prices according to the number of content purchases, and the license providing condition determining means determines the different license providing prices according to the number of content purchases by the client.

In one mode of the license management apparatus of the present invention, the license management apparatus further includes web-page generating/providing means for generating a web page containing the information concerning the license providing condition determined by the license providing condition determining means and content information, and for providing the web page for the client.

In one mode of the license management apparatus of the present invention, a license provided by the license management apparatus is a usage right of encrypted content contained in a content file owned by a client, the content file includes content data (Enc(Kc, Content)) encrypted with a content key [Kc], content key data (Enc (Kroot, Kc)) encrypted with a root key [Kroot], and an enabling key block (EKB) used for obtaining the root key [Kroot] by performing decryption processing using a device node key (DNK) stored in service data as license data, and the license provided by the license management apparatus contains the service data storing the device node key (DNK) therein.

In one mode of the license management apparatus of the present invention, the license management apparatus verifies a MAC as tampering verification data added to the identification data accompanying the license obtaining request received from the client, and issues a license on the condition that the identification data is not tampered with.

A second aspect of the present invention is a license management method for setting a condition for providing a license as a content usage right, including: an identification data receiving step of receiving identification data accompanying a license obtaining request from a client; a content usage information obtaining step of obtaining information indicating a content usage of the client from a disk table in which data indicating content usage statuses of clients is stored; a license providing condition information obtaining step of obtaining, based on the content usage information, information indicating a license providing condition from an album price master table in which information indicating license providing conditions according to the content usage status is stored; and a license providing condition determining step of determining the license providing condition for the client based on the obtained information concerning the license providing condition.

In one mode of the license management method of the present invention, the license obtaining request received from the client is a request to obtain a license corresponding to a usage right of content stored in an information recording medium, and the identification data accompanying the license obtaining request is a combination of a media ID, stored in the information recording medium, as an identifier unique to the information recording medium and a product ID as an identifier set for each product corresponding to a group of a plurality of information recording media, and the content usage information obtaining step obtains the content usage status data from the disk table based on the media ID and the product ID.

In one mode of the license management method of the present invention, the information concerning the license providing conditions is information concerning license providing prices, and the license providing condition information obtaining step obtains the information concerning the license providing price according to the content usage status from the album price master table.

In one mode of the license management method of the present invention, the information concerning the license providing conditions is information concerning license providing prices, the content usage status is the number of purchases as the number of purchases obtained for the content, the content usage information obtaining step obtains data indicating the number of content purchases as the content usage status data from the disk table based on the media ID and the product ID, the license providing condition information obtaining step obtains the information concerning the license providing price according to the number of content purchases from the album price master table, and the license providing condition determining step determines the different license providing prices according to the number of content purchases by the client.

In one mode of the license management method of the present invention, the license management method further includes a web-page generating/providing step of generating a web page containing the information concerning the license providing condition determined in the license providing condition determining step and content information, and of providing the web page for the client.

In one mode of the license management method of the present invention, the license is a usage right of encrypted content contained in a content file owned by a client, the content file includes content data (Enc(Kc, Content)) encrypted with a content key [Kc], content key data (Enc (Kroot, Kc)) encrypted with a root key [Kroot], and an enabling key block (EKB) used for obtaining the root key [Kroot] by performing decryption processing using a device node key (DNK) stored in service data as license data, and the license management method further includes a step of generating the service data storing the device node key (DNK) therein and of providing the service data for the client.

In one mode of the license management method of the present invention, the license management method further includes a step of verifying a MAC as tampering verification data added to the identification data accompanying the license obtaining request received from the client, and license is issued on the condition that the identification data is not tampered with.

A third aspect of the present invention is a computer program in which a processing program for executing license management processing for setting a condition for providing a license as a content usage right is indicated. The computer program includes: an identification data receiving step of receiving identification data accompanying a license obtaining request from a client; a content usage information obtaining step of obtaining information indicating a content usage of the client from a disk table in which data indicating content usage statuses of clients is stored; a license providing condition information obtaining step of obtaining, based on the content usage information, information indicating a license providing condition from an album price master table in which information indicating license providing conditions according to the content usage status is stored; and a license providing condition determining step of determining the license providing condition for the client based on the obtained information concerning the license providing condition.

According to the configuration of the present invention, a condition for providing a license as a content usage right for a client is dynamically set based on client's content usage status data. Thus, flexible services can be provided, for example, a license providing fee can be decreased or a license can be provided free for clients having a large number of content usages.

According to the configuration of the present invention, for providing a license for a usage right of the content stored in an information recording medium, globally unique data indicating a combination of a media ID, stored in the information recording medium, as the identifier unique to the information recording medium and a product ID as the identifier set for each product corresponding to a group of a plurality of information recording media is received from a client. Based on such ID data, the content usage status data is checked. Thus, licenses can be provided under the reliable management of the content usage.

According to the configuration of the present invention, a license provided by the license management apparatus is a usage right of encrypted content contained in a content file owned by a user. Service data storing a device node key (DNK) required for processing an enabling key block (EKB) is provided as license information. Thus, a strict management of the content usage associated with services can be implemented.

The computer program of the present invention is a computer program that can be provided to, for example, a general-purpose computer system which can execute various program codes, in a computer-readable storage medium, a communication medium, for example, a CD, a FD, or an MO, or via a communication medium, for example, a network. By providing the program in a computer-readable format, processing in accordance with the program can be implemented on a computer system.

Further object, features, and advantages of the present invention will become apparent according to a detailed description of the present invention through a preferred embodiment and the accompanying drawings. A system in this specification is a logical unit consisting of a plurality of devices, and it is not essential that the devices be disposed in the same casing.

### Brief Description of the Drawings

Fig. 1 illustrates the configuration of an information recording medium having a first data storage area subjected to copy protection processing and a second data storage area which is not subjected to copy prevention processing.
Fig. 2 illustrates an example of the data format of PID data.
Fig. 3 illustrates an example of MAC value generation processing.
Fig. 4 illustrates the directory configuration of the second data storage area.
Fig. 5 illustrates an example of a system for performing license obtaining processing when using and playback content.
Fig. 6 illustrates an example of the configuration of an information processing apparatus or a server.
Fig. 7 is a diagram illustrating a tree structure for encrypting and distributing various keys and data.
Fig. 8 illustrates examples of enabling key blocks (EKBs) used for distributing various keys and data.
Fig. 9 illustrates an example of content distribution and decryption processing by using an enabling key block (EKB).
Fig. 10 illustrates an example of the format of an enabling key block (EKB).
Fig. 11 illustrates the tag configuration of an enabling key block (EKB).
Fig. 12 illustrates a category division in a tree structure.
Fig. 13 illustrates a category division in a tree structure.
Fig. 14 illustrates a specific example of a category division in a tree structure.
Fig. 15 illustrates a first processing sequence between the entities in license obtaining processing.
Fig. 16 illustrates an example of the configuration of an album master table.
Fig. 17 illustrates an example of the configuration of a transaction table.
Fig. 18 illustrates examples of the configurations of a disk table and an album price master table.
Fig. 19 illustrates a second processing sequence between the entities in the license obtaining processing.
Fig. 20 illustrates an example of the configuration of a track table.
Fig. 21 is a flowchart illustrating the license obtaining processing performed by a license providing entity.
Fig. 22 illustrates a third processing sequence between the entities in the license obtaining processing.
Fig. 23 illustrates an example of a purchase page provided for a client in the license obtaining processing.
Fig. 24 illustrates an example of a start file provided for a client in the license obtaining processing.
Fig. 25 illustrates examples of the data configurations of service data and usage right information.
Fig. 26 illustrates a fourth processing sequence between the entities in the license obtaining processing.
Fig. 27 illustrates an overview of content playback processing.
Fig. 28 illustrates an example of content decryption and usage processing using enabling key blocks (EKBs).

### Best Mode for Carrying Out the Invention

The configuration of the present invention is described in detail below. A description is given in the order of the following items.
1. Content recording configuration of information recording medium
2. System configuration
3. Tree structure as key distribution configuration
4. Key distribution using EKB
5. EKB format
6. Tree category classification
7. License purchase and content playback processing

### [1. Content recording configuration of information recording medium]

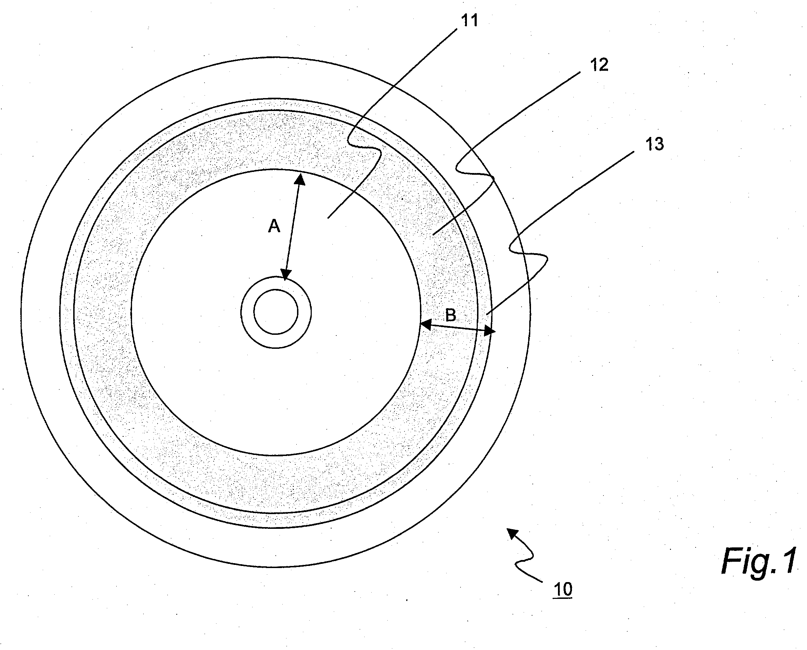

The content recording configuration of an information recording medium according to the present invention is described below with reference to Fig. 1. Fig. 1 is a plan view illustrating an information recording medium 10, for example, a CD or a DVD. The data recording area of the information recording medium is divided into two areas.

A copyright-protection content data recording area, i.e., a first data recording field (first session) 11 as a content recording field provided with a copy, rippling preventing function is set in the inner periphery (A) of the disk information recording medium 10. A second data recording field (second session) 12 recording encrypted content thereon is set at the outer periphery (B) of the information recording medium 10.

More specifically, the information recording medium 10 includes the first data storage area (first session) 11 set as a content storage area subjected to copy prevention processing, and the second data storage area (second session) 12 set as a content storage area which is not subjected to copy prevention processing. The second data storage area 12 stores an encrypted content file including encrypted content and encrypted key data which is generated by encrypting key data for decrypting the encrypted content and which can be decrypted only in licensed devices.

One session is a unit area formed of a lead-in area indicating a data start area (for example, mute data), a content storage area, and a lead-out area indicating a data end area. The information recording medium 10 shown in Fig. 1 is a multi-session recording medium on which two sessions are recorded.

The recorded content in the first data recording field 11 is recorded as content subjected to copy prevention processing. For example, a pseudo signal is recorded on the first track, and when the information recording medium 10 is set in a CD-ROM drive of a PC, the PC cannot recognize the CD as a music CD, thereby preventing the PC from playing back the CD by using a music CD playback program. In this case, various copy protection functions, for example, the copy control technique developed by Midbar Technology Ltd. and the copy control technique developed by Macrovision Corporation, can be employed.

Ripping or copying processing, for example, in which the information recording medium 10 is set in a CD drive of a PC, and the content recorded on the first data recording field 11 is read as digital data and is stored in another recording medium or converted into compressed data, for example, MP3 data, can be prevented for the content recorded on the first data recording field 11.

The content recorded on the first data recording field 11 can be played back in a playback device (player) having a playback-dedicated function, for example, a normal CD player. That is, a playback-dedicated CD player without a copy or ripping processing program is able to play back the content data by ignoring a pseudo signal recorded on the first track.

The content recorded on the second data recording field 12 is encrypted content. This encrypted content can be played back by being decrypted. Key data for decrypting the content can be obtained by receiving a content usage right (license). More specifically, as described below, the content can be decrypted by executing a process including decryption of an enabling key block (EKB) by using key data distributed in a key-distribution tree configuration.

Accordingly, the content recorded on the second data recording field 12 can be used only by the users having an authorized license. Even in a PC that cannot play back the content recorded on the first data recording field 11, the content recorded on the second data recording field 12 can be played back and used by receiving an authorized license.

A PID (Postscribed-ID) recording area 13 is provided in part of the area of the second data recording field 12. The PID includes a media ID provided as an identifier (ID) unique to each disk as a predetermined disk group unit, for example, a title unit, an album unit, a category unit, or a manufacturing lot unit, and version information of the ID. A MAC (message authentication code) as a data tampering-verification code is added to the PID.

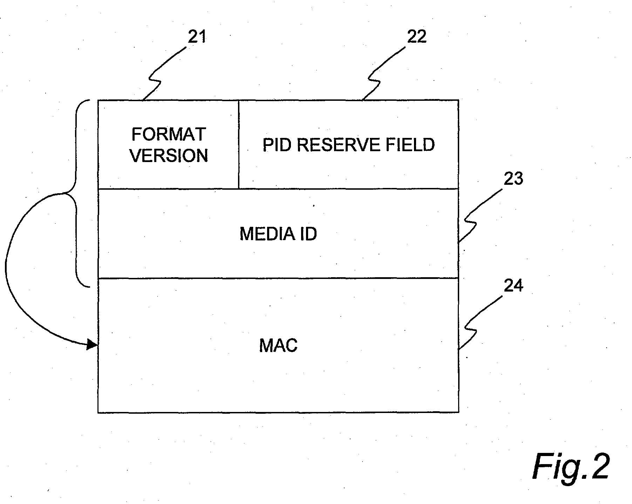

An example of the data configuration of the PID is shown in Fig. 2. The PID includes a format version 21 indicating the format version of the PID, a PID reserve field 22, and a media ID 23 as identification data unique to each disk. A MAC 24 as the tampering-verification code is added to the above data items.

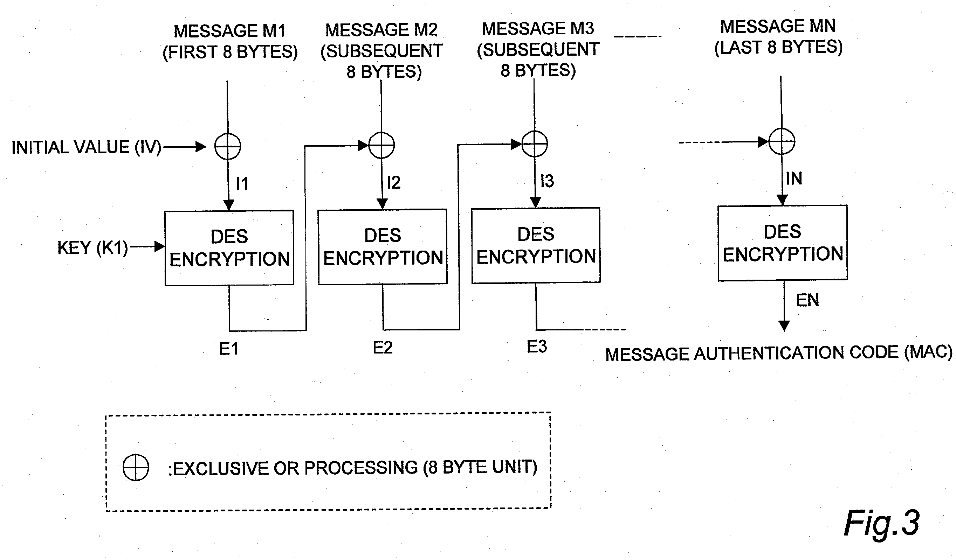

The message authentication code (MAC) is generated as data tampering-verification data. Although various techniques are available for generating a MAC value and verifying data, a technique for generating a MAC value using DES encryption processing is shown in Fig. 3 by way of example.

The example of the technique for generating a MAC value using DES encryption processing shown in Fig. 3 is described below. A subject message is divided into 8 byte units (hereinafter, the divided message portions are referred to as "M1, M2, ..., MN). An exclusive OR is first performed on the initial value (hereinafter referred to as "IV") and M1 (the resulting value is indicated by I1). Then, I1 is input into a DES encryption unit, and is encrypted by using a key (hereinafter referred to as "K1") (the output is indicated by E1). Subsequently, an exclusive OR is performed on E1 and M2, and the output I2 is input into a DES encryption unit, and is encrypted by using the key K1 (output E2). Thereafter, the above operation is repeated until all the message portions are encrypted. The final output EN is used as the message authentication code (MAC).

The MAC value is different if the source data is changed. The MAC generated based on the data (message) to be verified is compared with the recorded MAC, and if the two MAC values coincide with each other, it can be proved that the data (message) to be verified has not been changed or tampered with.

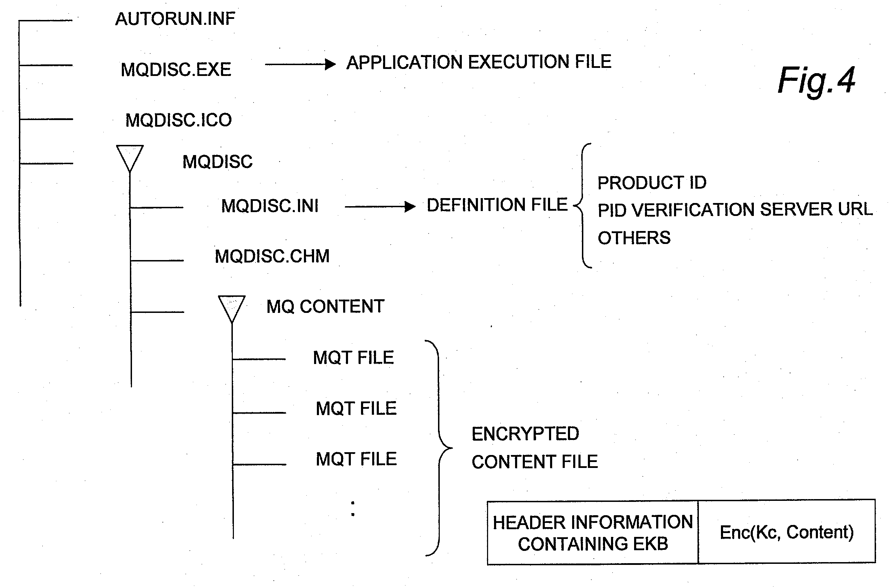

An example of the directory configuration of a data file stored in the second data recording field 12 is shown in Fig. 4. The directly includes a CD application file [MQDISC.EXE], which is automatically executed by loading the information recording medium 10 on a CD drive of a PC, and a definition file [MQDISC.INI] at a lower level, and also includes at least one encryption content file [MQT file].

In the definition file [MQDISC. INI], the product ID set as the identifier in a predetermined disk group unit, for example, a title unit, an album unit, a category unit, or a manufacturing lot unit is stored. Information concerning the URL of a PID verification server, which is set as a verification server for verifying data sent from a user when obtaining a license for the right of playing back and using the encrypted content stored in the second data recording field 12 is also stored.

The media ID defined in the above-described PID is set as the ID unique to each disk for one product ID, and, basically, data as a combination of a product ID and a media ID is globally unique ID data.

The encrypted content file [MQT file] includes data obtained by encrypting content with a content key Kc [Enc(Kc, Content)]. Enc(A, B) indicates that B is encrypted with A.

The encrypted content file [MQT file] includes header information containing an enabling key block (EKB). The enabling key block (EKB) is encrypted data that can be decrypted by using a device node key (DNK) distributed to authorized devices. The user is able to decrypt the enabling key block (EKB) by acquiring a license as an authorized content usage right. Then, by using the content key Kc obtained by decrypting the EKB, the user is able to decrypt the encrypted content data [Enc(Kc, Content)] so as to play back and use the content. Details of such processing are given below.

It is necessary to obtain a license to play back the encrypted content recorded on the second data recording area. For obtaining the license, an information processing apparatus, for example, a PC, reads the product ID and the PID (see Fig. 2) recorded on the second data recording area, and sends them to the PID verification server designated by the URL indicated in the definition file [MQDISC.INI]. The PID verification server performs the above-described verification processing on the MAC contained in the PID so as to determine whether the data sent from the user is authenticated data. If it is authenticated data, the PID verification server provides the license for the user by a predetermined procedure. Details of license providing processing are given below.

### [2. System configuration]

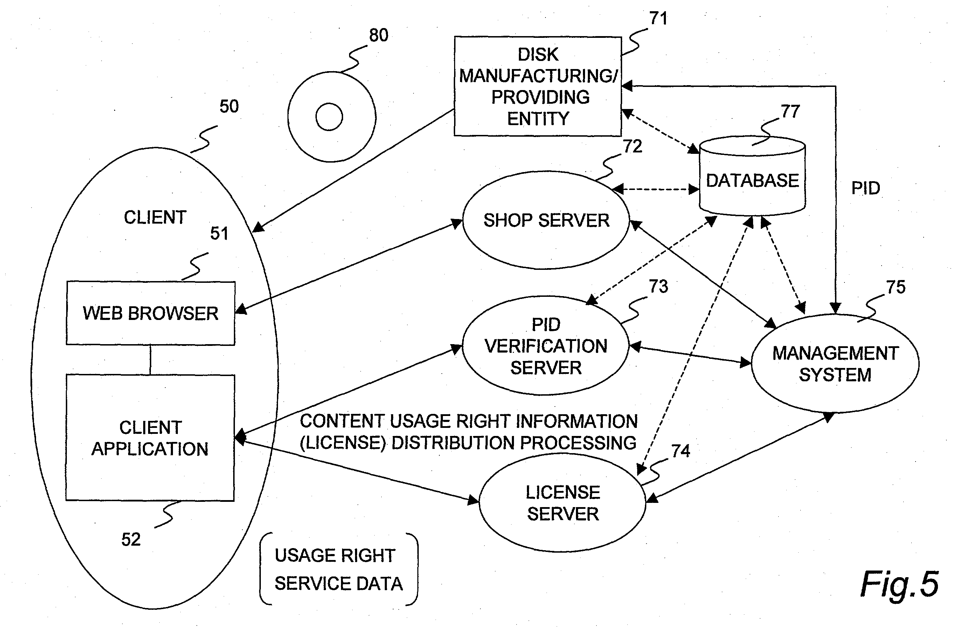

A description is now given, with reference to Fig. 5, of an example of the system configuration formed of an entity for manufacturing and providing the information recording medium shown in Fig. 1, a license providing entity for providing a license as a right of playing back and using the encrypted content recorded on the second data recording field, and a client using the content.

A client 50 using the content purchases an information recording medium 80, for example, a CD, from a disk manufacturing/providing entity. As described with reference to Fig. 1, the information recording medium 80 includes a first data storage area (first session) set as a content storage area subjected to copy prevention processing, and a second data storage area (second session) set as a content storage area which is not subjected to copy prevention processing. The second data storage area stores an encrypted content file including encrypted content and encrypted key data which is generated by encrypting key data for decrypting the encrypted content and which can be decrypted only in licensed devices.

The client wishes to use the encrypted content recorded on the second data recording field 12 of the information recording medium 10 shown in Fig. 1. A usage right for the content recorded on the first data recording field 11 of the information recording medium 10 shown in Fig. 1 is distributed when the user purchases the disk (for example, a CD). Although this content cannot be played back in, for example, a PC, based on a copying protection function, it can be played back in, for example, a normal CD player.

Accordingly, a description is mainly given of processing when the client who wishes to play back and use the encrypted content recorded on the second data recording field of the information recording medium obtains a license and uses the content.

The client 50 shown in Fig. 5 is an information processing apparatus as a device that can use the content, i.e., a device that can play back the content. The client 50 may be one of various types of information processing apparatuses, for example, a PC or a PDA. The client 50 includes a browser 51 and a client application 52 as software, which are executed by control means, for example, a CPU.

The client application 52 is an application used for processing an execution file (see Fig. 4) recorded on an information recording medium, for example, a CD, and for executing processing for obtaining license information containing service data or content usage-right information, which is executed as part of a series of processing for obtaining a license. The client application 52 is stored in the information processing apparatus of the client.

The client 50 is connected to a shop server 72, a PID verification server 73, and a license server 74 via a communication network, for example, the Internet. The shop server 72 serves as an intermediary when the client 50 purchases a content usage right (license) for playing back and use the encrypted content recorded on the second data recording field of the information recording medium 80. The shop server 72 provides content information indicating, for example, a license fee, for the client 50 via the browser 51, and also accepts a purchase request from the client 50. The shop server 72 also performs accounting processing for a purchased license if necessary.

The PID verification server 73 performs PID verification as a pre-procedure for obtaining a license by the client 50. The license server 74 provides content usage-right information concerning the content used by the client for the client 50 when the integrity of the client 50 is verified by the PID verification server 73.

A management system 75 is connected to the disk manufacturing/providing entity 71, the shop server 72, the PID verification server 73, and the license server 74. The management system 75 shares, with the disk manufacturing/providing entity 71, PID information recorded on a content storage disk manufactured by the disk manufacturing/providing entity 71. In license issuing processing, this PID information is sent from the client to the PID verification server 73, and verification processing is performed in the PID verification server 73.

The management system 75 also issues a transaction ID (TID), which serves as permission information in response to a license request from the client 50. The management system 75 also gives permission to the license server 74 to issue usage right data as content usage-right information. Details of such processing are given below.

In a database 77, data that is permitted to be accessed within an access right set in each of the disk manufacturing entity 71, the shop server 72, the PID verification server 73, the license server 74, and the management system 75 is stored. The database 77 stores, for example, an album master table, a transaction table, a disk table, an album-price master table, and a track table. Details of the configurations of the tables and processing using the tables are given below.

In Fig. 5, the shop server 72, the PID verification server 73, the license server 74, and the management system 75 are formed as separate elements. Although these elements are discretely disposed and connected to a network, as shown in Fig. 5, they may be formed as a single device executing the processing of all the servers. Alternatively, they may be formed as a plurality of devices, each device executing the processing of one or more servers. In this specification, a system executing part of or the whole processing performed in the shop server 72, the PID verification server 73, the license server 74, and the management system 75 is referred to as a "license management apparatus".

The client 50 performs a series of processing accompanied by PID verification, for example, the sending of a PID and a product ID to the PID verification server 73, and license obtaining processing by being connected to the license server 74 under the control of the client application 52. The client 50 views information provided by the shop server 72 and performs accounting processing by starting the browser 51 under the control of the client application 52.

Although only one client and only one server of each of the servers are shown in Fig. 5, a plurality of clients and a plurality of servers are connected to a communication network, for example, the Internet. A client then selects a server suitable for a service or processing to be executed, and proceeds with the processing after being connected to the selected server.

Content usage-right information is provided to the client 50 from the license server 74. The client application 52 of the client 50 then verifies the usage right information, and, when the client 50 is found to possess a usage right, the client application 52 decrypts the encrypted content.

The client 50 possesses key data, for example, an enabling key block (EKB) and a device node key (DNK), as key information which enables the use of content based on a content usage right. The enabling key block (EKB) and the device node key (DNK) are key data for obtaining an encrypted key required for enabling only user devices having an authorized content usage right to decrypt and use the encrypted content. EKB and DNK are described below.

The license server 74 generates usage right information based on predetermined content usage conditions and provides the information for the client 50. The license server 74 also generates service data based on the device node key (DNK) and the enabling key block (EKB) provided by the management system 75, and provides the service data for the client 50. The service data includes an enabling key block (EKB) having a service device node key (SDNK) required for decrypting encrypted content.

As the content usage conditions, restrictions on the usage period, the number of copies, and the number of portable media (PM) that can use the content at the same time (the number of so-called "checkouts") can be set. The portable media (PM) are recording media, for example, flash memory, small HDs, optical discs, magneto-optical disks, and MDs (Mini Disks), which can be used in a portable device.

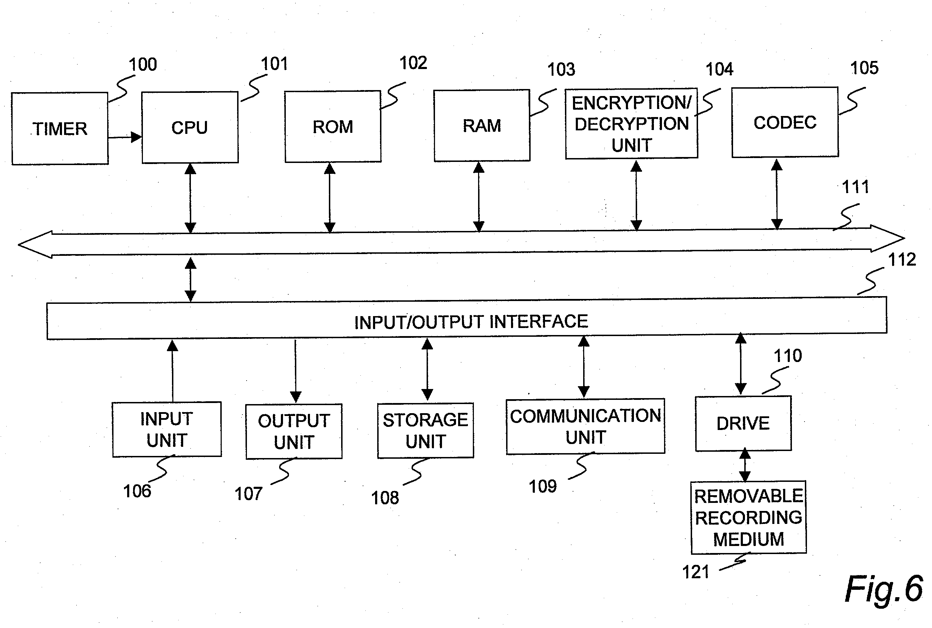

A description is given below, with reference to Fig. 6, of an example of the hardware configuration of an information processing apparatus, which can serve as one of the client 50, the shop server 72, the PID verification server 73, the license server 74, and the management system 75. Each system can be realized by implementing a suitable processing program in, for example, a PC or a server provided with a CPU. The configuration shown in Fig. 6 is as follows.

A CPU (central processing unit) 101 executes various types of processing according to various programs stored in a ROM (read only memory) 102 or programs stored in a storage unit 108 and loaded to a RAM (random access memory) 103. A timer 100 performs timing and supplies clock information to the CPU 101.

The ROM (read only memory) 102 stores programs used by the CPU 101, computation parameters, fixed data, etc. The RAM (random access memory) 103 stores programs used by the CPU 101 and parameters that are suitably varied according to the execution of the CPU 101. These elements are connected to each other by a bus 111, for example, a CPU bus.

An encryption/decryption unit 104 performs encryption processing of communication data or content, and encryption processing using, for example, DES (Data Encryption Standard) encryption algorithms, MAC generation, and verification processing by using a device node key (DNK) and an enabling key block (EKB). The encryption/decryption unit 104 also performs various types of encryption processing such as authentication and session-key sharing processing when sending and receiving communication data, for example, license information, to and from another connection device.

A codec 105 performs data encoding and decoding according to various formats, for example, ATRAC (Adaptive Transform Acoustic Coding)3, MPEG, and JPEG. Data to be processed is input from a removable storage medium 121 via the bus 111, an input/output interface 112, and a drive 110, or from a communication unit 109. The processed data is stored in the removable storage medium 121 or is output via the communication unit 109 if necessary.

The input/output interface 112 is connected to an input unit 106, for example, a keyboard or a mouse, an output unit 107, for example, a CRT or LCD display and a speaker, the storage unit 108, for example, a hard disk, and the communication unit 109 formed of, for example, a modem or a terminal adapter, and data is sent and received via a communication network, for example, the Internet.

### [3. Tree structure as key distribution configuration]

A description is now given of a device and key management configuration formed by a tree system, which is one mode of broadcast encryption techniques that enable only clients having an authorized content usage right to use content.

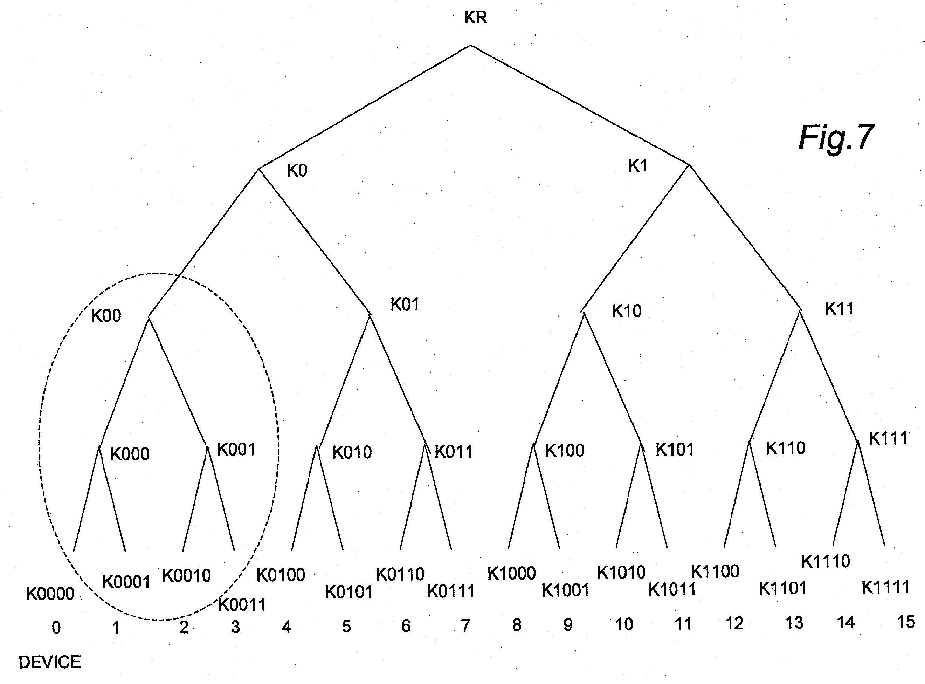

Numbers 0 through 15 indicated at the bottom of Fig. 7 represent user devices to use the content as clients. That is, leaves in the hierarchical tree structure shown in Fig. 7 correspond to the devices.

When being manufactured or shipped, or later than that, each of the devices 0 through 15 stores in a memory a key set (device node key (DNK)) consisting of node keys assigned to the nodes positioned from the leaf of each device to the root and a leaf key of each leaf. K0000 through K1111 indicated at the bottommost level of Fig. 7 represent leaf keys assigned to the devices 0 through 15, respectively, and the root key KR through keys K111 positioned from the topmost level to the second level from the bottommost level represent node keys.

In the tree structure shown in Fig. 7, the device 0, for example, owns leaf key K0000 and node keys K000, K00, K0, and KR. The device 5 owns K0101, K010, K01, and KR. The device 15 owns K1111, K111, K11, K1, and KR. In the tree shown in Fig. 7, only 16 devices, i.e., devices 0 through 15, are shown, and the tree structure is formed of four levels and is vertically symmetrical. However, more devices and more levels may be formed in the individual portions of the tree.

The devices in the tree structure shown in Fig. 7 use various recording media, for example, DVDs, CDs, MDs, and flash memory, which are integrated into or detachably attached to the devices. There are also various application services coexist in the tree structure. Accordingly, the hierarchical tree structure, which is a content or key distribution configuration, shown in Fig. 7 can be used in a system in which different devices and different applications coexist.

In the system in which various devices and applications coexist, the portion surrounded by the broken line shown in Fig. 7, for example, i.e., the devices 0, 1, 2, and 3, are set as one group using the same recording medium. The following processing, for example, is performed for the devices 0, 1, 2, and 3. The same content is encrypted and sent from a provider to the devices surrounded by this broken line, and a content key used in common for the devices is sent to the devices. Payment data concerning a content fee is encrypted and output from the devices to a provider or a billing agent. The entities, for example, the content server, the license server, and the shop server, which send and receive data to and from the devices, can simultaneously transmit data to the devices 0, 1, 2, and 3 surrounded by the broken line in Fig. 7 as one group. A plurality of such groups are present in the tree shown in Fig. 7.

The node keys and leaf keys may be centrally managed by a certain management system having a key management center function, or may be managed for each group by message data distribution means, for example, a provider or a billing agent, which send and receive data to and from each group. In case of a leakage of the keys, the node keys and leaf keys are renewed by, for example, a management system, a provider, or a billing agent having a key management center function.

In this tree structure, as shown in Fig. 7, the three devices 0, 1, 2, and 3 contained in one group own a device node key (DNK) including the common keys K00, K0, and KR. By sharing the same node keys, for example, common keys can be provided only for the devices 0, 1, 2, and 3. For example, the node key K00, which is owned in common by the devices 0, 1, 2, and 3, is a common possession key used for the devices 0, 1, 2, and 3. If, for example, a value Enc(K00, Knew) obtained by encrypting a new key Knew with the node key K00 is distributed to the devices 0, 1, 2, and 3 via a network or by being stored in a recording medium, only the devices 0, 1, 2, and 3 can decrypt the encrypted value Enc(K00, Knew) by using the common possession node key K00 so as to obtain the new key Knew. Enc(Ka, Kb) is data generated by encrypting Kb with Ka.

If, for example, at a certain time t, the keys K0011, K001, K00, K0, and KR owned by the device 3 are decrypted and disclosed by an attacker (hacker), it is necessary to disconnect the device 3 from the system in order to protect data thereafter received by the system (the group of the devices 0, 1, 2, and 3). Accordingly, the node keys K001, K00, K0, and KR must be renewed by new keys K(t)001, K(t)00, K(t)0, and K(t)R, respectively, and the renewed keys must be reported to the devices 0, 1, and 2. K(t)aaa is a renewed key Kaaa at generation t.

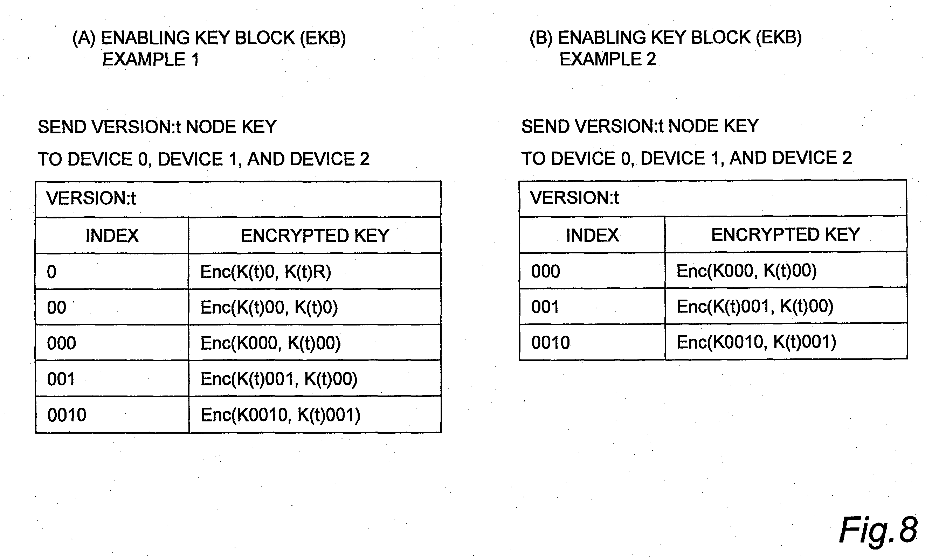

Renewed-key distribution processing is described below. Keys are renewed by supplying a table formed of block data, which is referred to as an "enabling key block (EKB)", shown in Fig. 8(A), to the devices 0, 1, and 2 via a network or by storing the table in a recording medium. The enabling key block (EKB) is formed of encrypted keys for distributing renewed keys to the devices corresponding to the leaves, which form a tree structure, such as that shown in Fig. 7. The enabling key block (EKB) is also referred to as a "key renewal block (KRB)".

The enabling key block (EKB) shown in Fig. 8(A) is formed as block data which enables only the required devices to renew the node keys. The example shown in Fig. 8 is block data formed for distributing renewed node keys at generation t to the devices 0, 1, and 2 in the tree structure shown in Fig. 7. Fig. 7 shows that the devices 0 and 1 need K(t)00, K(t)0, and K(t)R as renewed node keys, and the device 2 needs K(t)001, K(t)00, K(t)0, and K(t)R as renewed keys.

As shown in Fig. 8(A), the EKB includes a plurality of encrypted keys. The encrypted key in the bottommost line is Enc(K0010, K(t)001). This is a renewed node key K(t)001 encrypted with the leaf key K0010 owned by the device 2, and the device 2 can obtain K(t)001 by decrypting this encrypted key with the leaf key owned by the device 2. By using K(t)001 obtained by the above-described decryption, the encrypted key Enc(K(t)001, K(t)00) in the second line from the bottom in Fig. 8(A) can be decrypted so as to obtain the renewed node key K(t)00. Thereafter, the encrypted key Enc(K(t)00, K(t)0) in the second line from the top in Fig. 8(A) is decrypted so as to obtain the renewed node key K(t)0, and the encrypted key Enc(K(t)0, K(t)R) in the topmost line in Fig. 8(A) is decrypted so as to obtain K(t)R. The devices K0000 and K0001 need to renew the node keys K(t)00, K(t)0, and K(t)R, but do not have to renew the node key K000. The devices K0000 and K0001 decrypt the encrypted key Enc(K000, K(t)00) in the third line from the top in Fig. 8(A) so as to obtain K(t)00, and then decrypt the encrypted key Enc(K(t)00, K(t)0) in the second line from the top in Fig. 8(A) so as to obtain the renewed node key K(t)0, and then decrypt the encrypted key Enc(K(t)0, K(t)R) in the topmost line in Fig. 8(A) so as to obtain K(t)R. In this manner, the devices 0, 1, and 2 can obtain the renewed key K(t)R. The index in Fig. 8(A) indicates the absolute address of the node key or the leaf key used as a decryption key.

If only the node key K00 needs to be renewed without the need to renew the node keys K(t)0 and K(t)R at the upper levels of the tree structure shown in Fig. 7, the enabling key block (EKB) in Fig. 8(B) can be used for distributing the renewed node key K(t)00 to the devices 0, 1, and 2.

The EKB shown in Fig. 8(B) can be used when distributing, for example, a new content key shared by a specific group. More specifically, it is now assumed that the devices 0, 1, 2, and 3 within the group indicated by the broken line use a certain recording medium and need a new common content key K(t)con. In this case, data Enc(K(t), K(t)con) generated by encrypting the common renewed content key K(t)con by using K(t)00 renewed from the common node key K00 for the devices 0, 1, 2, and 3 is distributed together with the EKB shown in Fig. 8(B). Accordingly, the distributed data cannot be decrypted by devices in another group.

That is, the devices 0, 1, and 2 decrypt the above ciphertext by using K(t)00 obtained by EKB processing, and then obtains a key at time t, for example, the content key K(t)con for decrypting the content.

### [4. Key distribution using EKB]

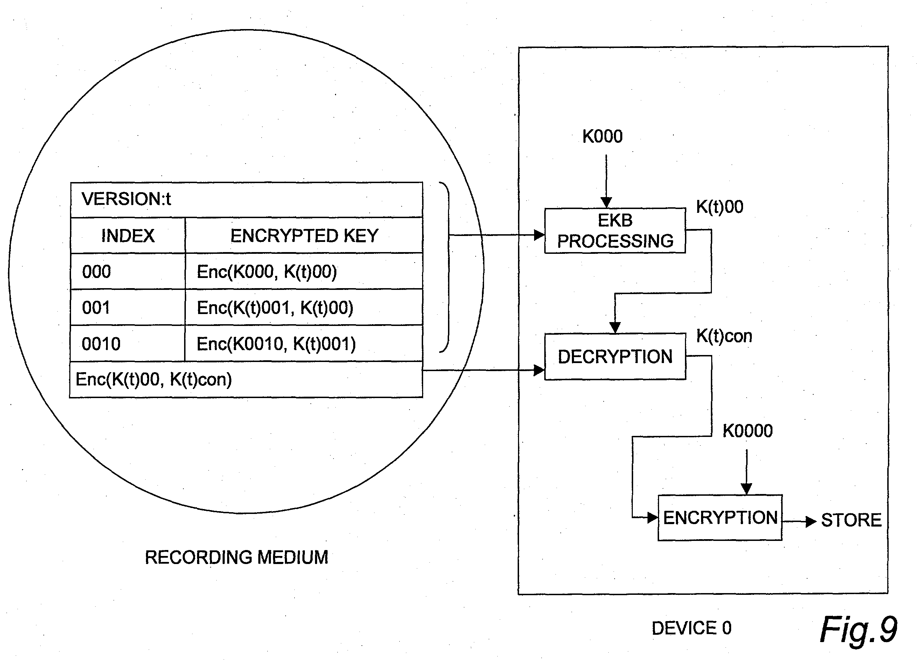

Fig. 9 illustrates an example of the processing performed by the device 0 for obtaining a key at time t, for example, the content key K(t)con used for decrypting the content. More specifically, Fig. 9 illustrates the processing performed by the device 0 that receives, via a recording medium, the EKB shown in Fig. 8(B) and data Enc(K(t)00, K(t)con) generated by encrypting the new common content key K(t)con by using K(t)00. That is, in the example of Fig. 9, the encrypted message data by the EKB processing is the content key K(t)con.

As shown in Fig. 9, the device 0 generates the node key K(t)00 by performing EKB processing similar to the above-described processing by using the EKB at generation t stored in the recording medium and the node key K000 stored in the device 0. The device 0 then decrypts the renewed content key K(t)con by using the decrypted renewed node key K(t)00, and encrypts the content key K(t)con by using the leaf key K0000 unique to the device 0 and stores the content key K(t)con for using it later.

### [5. EKB format]

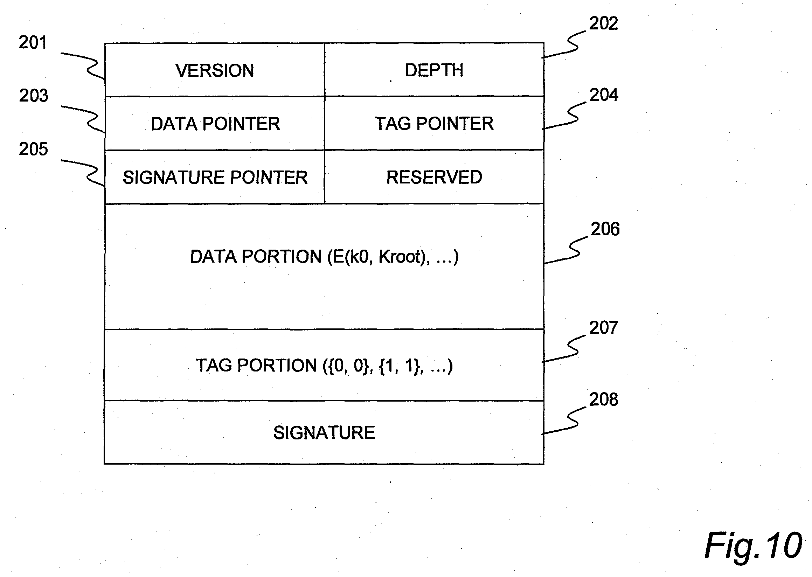

Fig. 10 illustrates an example of the format of the enabling key block (EKB). A version 201 is an identifier indicating the version of the enabling key block (EKB). The version has a function of identifying the latest EKB and a function of indicating the correlation between the latest EKB and the content. A depth indicates the level number of a hierarchical structure at which a device to receive the enabling key block (EKB) is positioned. A data pointer 203 is a pointer indicating the position of a data portion in the enabling key block (EKB). A tag pointer 204 is a pointer indicating the position of a tag portion, and a signature pointer 205 is a pointer indicating the position of a signature.

A data portion 206 stores data generated by, for example, encrypting a node key to be renewed. Encrypted keys corresponding to renewed node keys, such as those shown in Fig. 8, are stored.

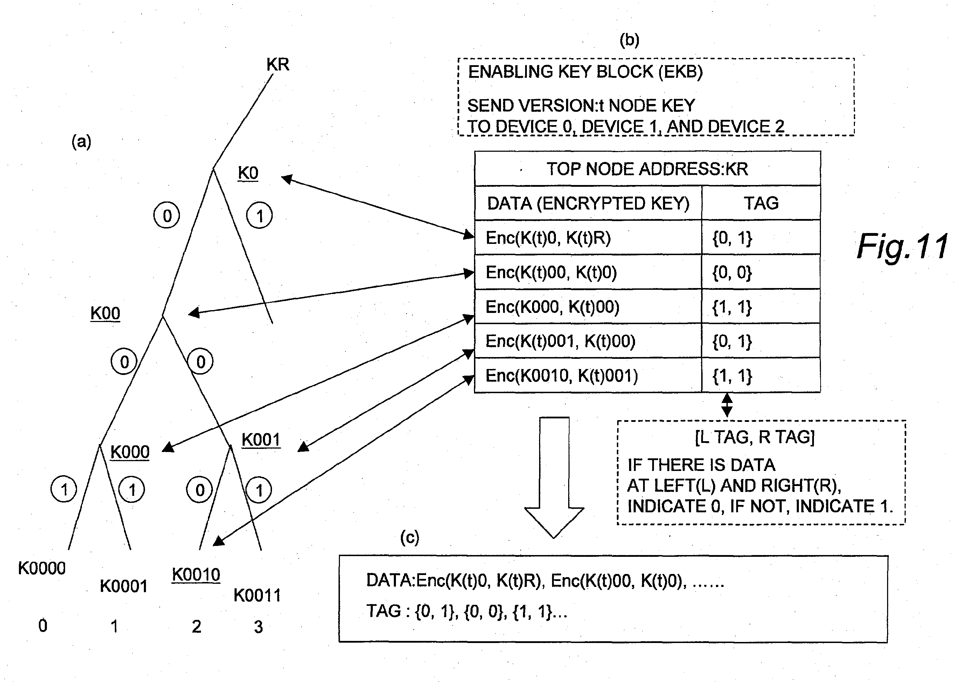

A tag portion 207 is a tag indicating the positional relationship between encrypted node keys and leaf keys stored in the data portion. The allocation rule of these tags is described below with reference to Fig. 11. Fig. 11 illustrates an example in which the enabling key block (EKB) described with reference to Fig. 8(A) is transmitted as data. The data is indicated as shown in table (b) of Fig. 11. The address of the top node contained in the encrypted keys is set to be the top node address. In this case, since the renewed key K(t)R of the root key is contained, the top node address is KR. In this case, for example, data Enc(K(t)0, K(t)R) at the topmost level is positioned as indicated in the hierarchical tree shown in (a) of Fig. 11. The subsequent data Enc(K(t)00, K(t)0) is positioned at the left bottom of the previous data in the tree. If subsequent data is present, the tag is set to be 0, and if not, the tag is set to be 1. The tag is set as [left(L) tag, right(R) tag]. For the data Enc(K(t)0, K(t)R) at the topmost level, since there is data at the left, the L tag is 0, and since there is no data at the right, the R tag is 1. In this manner, tags are set for all the items of data, and a data row and a tag row shown in (c) of Fig. 11 are formed.

The tags are set for indicating at which level data Enc(Kxxx, Kyyy) is positioned in the tree structure. Key data Enc(Kxxx, Kyyy) and other key data stored in the data portion is a list of mere encrypted key data, and thus, the tags serve the function of determining the positions of encrypted keys stored as data in the tree structure. Instead of using the above-described tags, node indexes associated with encrypted data, such as the configuration described with reference to Fig. 8, may be used for forming the following data configuration.
0: Enc(K(t)0, K(t)root)
00: Enc(K(t)00, K(t)0)
000: Enc(K(t)000, K(T)00)
However, data formed by using indexes becomes redundant, increasing the amount of data, which is not desirable in performing distribution via a network. In contrast, by using the above-described tags as index data indicating the key positions, the positions of the keys can be determined with a small amount of data.

The EKB format is further described by referring back to Fig. 10. A signature 208 is a digital signature added by a management system, a content server, a license server, or a shop server which has issued the enabling key block (EKB), and which is provided with a key management center function. A device which receives the EKB verifies the signature to confirm that the EKB is an enabling key block (EKB) issued by an authorized enabling key block (EKB) issuer.

### [6. Tree category classification]

A description is now given of the configuration in which the renewing of keys and the distribution of encrypted keys and data are efficiently performed by classifying a hierarchical tree structure defining node keys according to the categories of the devices.

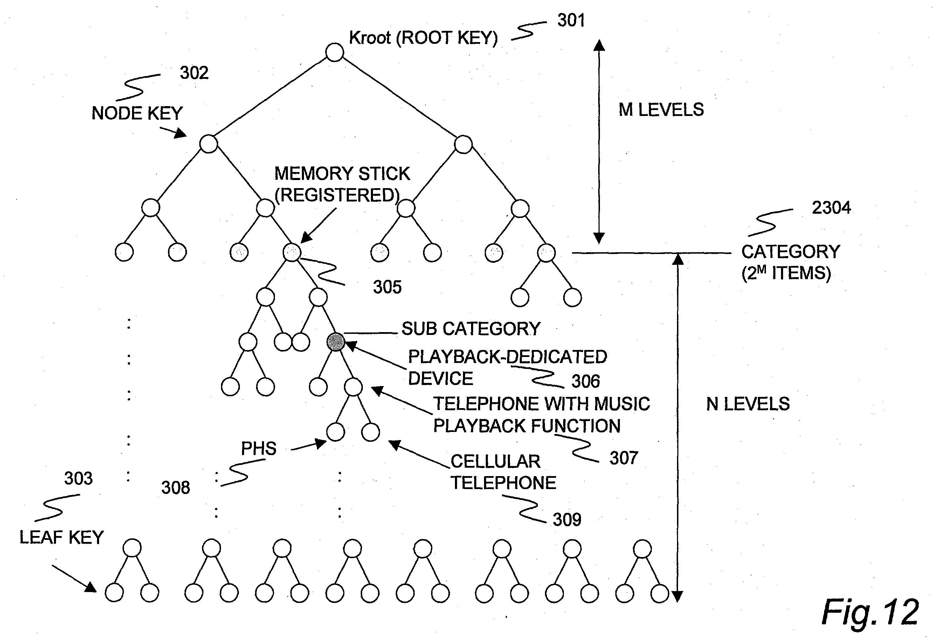

Fig. 12 illustrates an example of a category classification of a hierarchical tree structure. In Fig. 12, a root key Kroot 301 is set at the topmost level of the hierarchical tree structure, node keys 302 are set at the intermediate levels, and leaf keys 303 are set at the bottommost level. Each device has a unique leaf key, node keys positioned from the leaf key to the root key, and the root key.

Nodes positioned from the topmost level to the M-th level are set as category nodes 304 by way of example. That is, each node at the M-th level is a device setting node of a specific category. By using one node at the M-th level as an origin, nodes and leaves at (M+1)-th and lower levels are nodes and leaves associated with the devices included in that category.

For example, a category [Memory Stick (registered)] is set in one node 305 at the M-th level shown in Fig. 12, and nodes and leaves linked from this node are set as nodes and leaves dedicated for the category including various devices using Memory Stick. That is, the nodes and leaves linked from the node 305 are defined as a group of nodes and leaves related to the devices defined as the Memory Stick category.

The level lower than the M-th level by a few levels can be set as a sub category node 306. For example, at the level lower than the level of the category [Memory Stick] node 305 by two levels, a node for [playback-dedicated device] is set as a sub category node included in the category for the devices using Memory Stick. A node 307 for a telephone with a music playback function included in the category of the playback-dedicated device is set under the node 306 for the playback-dedicated device, which serves as a sub category node. A [PHS] node 308 and a [cellular telephone] node 309 included in the category of the telephone with a music playback function can be set at a level lower than the node 307.

The categories and sub categories may be set, not only by the device types, but also by nodes uniquely managed by a manufacturer, a content provider, or a billing agent, i.e., by a certain unit, for example, a processing unit, an allocation unit, or a service provision unit (hereinafter collectively referred to as "entities"). If, for example, one category node is set as an origin node dedicated for the game machine XYZ sold by a game machine manufacturer, the game machine manufacturer can sell the game machine XYZ by storing node keys and leaf keys at levels lower than the origin node in the game machine XYZ. Thereafter, to distribute or renew the encrypted content and various keys, an enabling key block (EKB) formed by the node keys and leaf keys lower than the origin node key is generated and distributed. Accordingly, the distributed data can be used only by the devices linked to the origin node.

As described above, by using one node as an origin node and by setting nodes linked to the origin node as related nodes of a category or a sub category defined in the origin node, a manufacturer or a content provider managing the origin node of a category level or a sub category level uniquely generates an enabling key block (EKB) having the origin node, and distributes the enabling key block (EKB) to the devices belonging to the origin node. Thus, key renewal can be performed without influencing devices of another category which do not belong to the origin node.

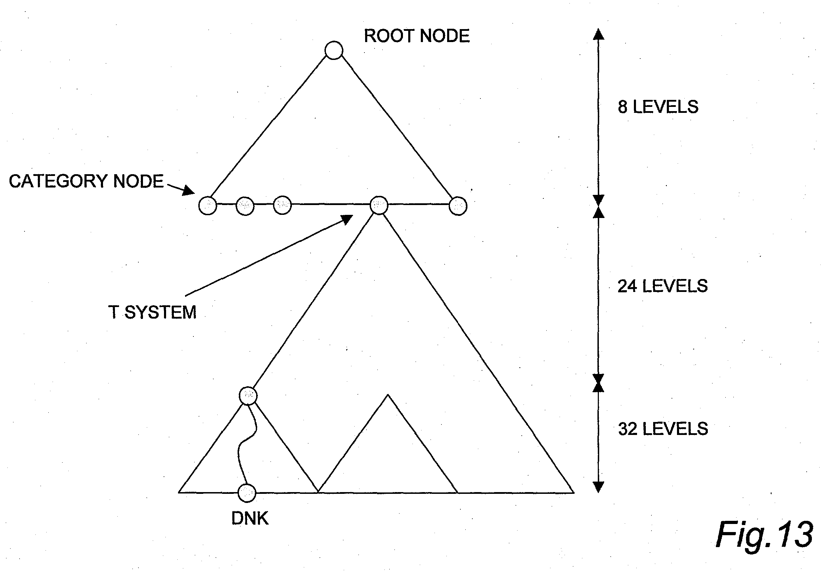

For example, key management is performed in a tree structure system, as shown in Fig. 13. In the example shown in Fig. 13, nodes at (8+24+32) levels form a tree structure, and a category is allocated to each of the nodes from the root node to the nodes at the eighth level lower than the root node. The "category" means, for example, a category of devices using a semiconductor memory, for example, Memory Stick, or a category of devices receiving digital broadcasts. Then, the system of the present invention (referred to as the "T system"), which serves as a license management system, is applied to one of the category nodes.

More specifically, keys assigned to nodes at 24 levels lower than the node of the T system are applied to service providers, which serve as management entities, for example, shop servers or license servers, or to services provided by the service providers. In this example, 2²⁴ (about 16 mega) service providers or services can be defined. Further, by lower 32 levels, 2³² (about 4 giga) users (or user devices) can be defined. Keys assigned to the nodes on the paths from the nodes at the 32 levels to the node of the T system form a DNK (device node key), and the IDs assigned to the leaves at the bottommost level are set as leaf IDs.

For example, a content key used for encrypting content is encrypted with a root key KR', and a renewed node key at a higher level is encrypted by using a renewed node key at a level immediately lower than the previous level, and is located in an EKB. In the EKB, a renewed node key at the second level from the bottommost level is encrypted by a node key or a leaf key at the bottommost level, and is located in the EKB.

By using one key in the DNK indicated in service data, a user device decrypts a renewed node key at a level immediately higher than the level of the user device in the EKB, which is distributed together with content data. Then, by using the decrypted key, the user device decrypts a renewed node key at a level higher than the previous level in the EKB. By sequentially performing the above-described processing, the user device is able to obtain the renewal root key KR'.

By the category classification of a tree, as stated above, one node can be used as an origin node, and nodes linked to the origin node can be set as related nodes of a category or a sub category defined in the origin node. Then, a manufacturer or a content provider managing the origin node of a category level or a sub category level uniquely generates an enabling key block (EKB) having the origin node, and distributes the enabling key block (EKB) to the devices belonging to the origin node.

A description is further given of the content distribution and usage modes employing an EKB distribution system based on a plurality of categories by performing the device management using the above-described tree structure.

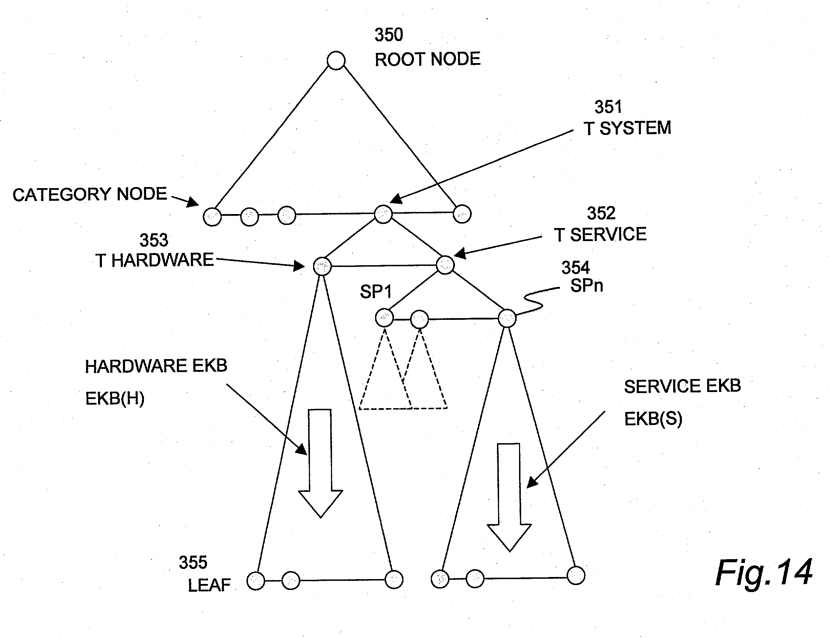

Two categories are described below with reference to Fig. 14. As shown in Fig. 14, a T system node 351 is set at a level under a root node 350, and a T service node 352 and a T hardware node 353 are set at a level lower than the previous level. In a category tree having the T hardware node 353 as the origin, a user device itself is set as a leaf 355, and a hardware EKB[EKB(H)] issued to the device is distributed. In a category tree having the T service node 352 as the origin, a service EKB[EKB(S)] issued to the service provided for the user devices is distributed.

Both the hardware EKB[EKB(H)] and the service EKB[EKB(S)] can be decrypted by possessing a device node key (DNK) provided for authorized devices, i.e., keys corresponding to the nodes on the paths from the leaf to the T system node.

### [7. License purchase and content playback processing]

A description is now given of license obtaining processing performed by a client required for using (playing back) the content (encrypted content) recorded on the second data recording field 12 of the information recording medium (disk) 10 shown in Fig. 1, and of content usage (playback) processing based on an obtained license.

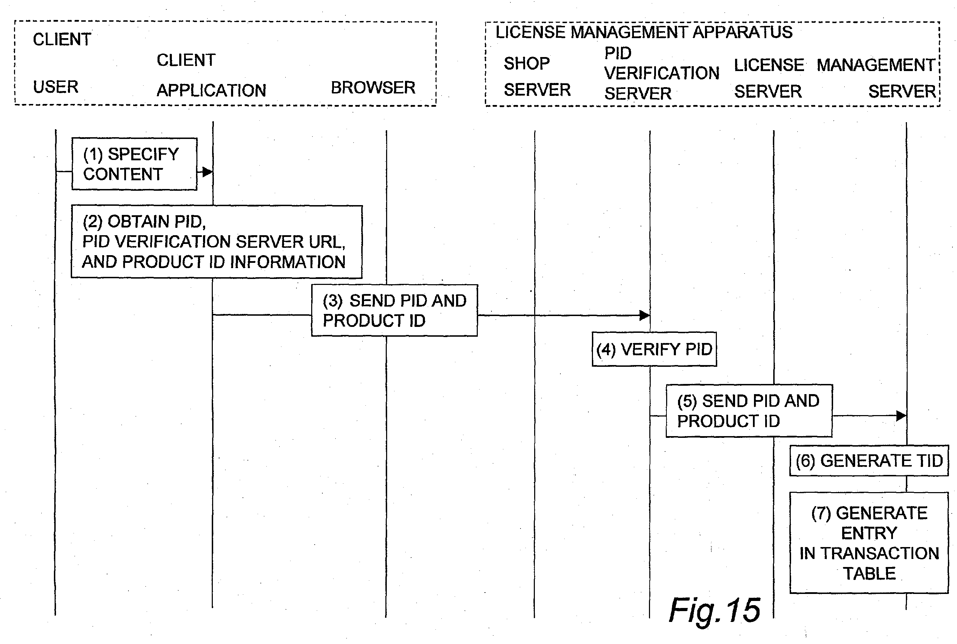

Fig. 15 illustrates initial steps of a communication sequence in the content purchase processing performed between a client, for example, a PC having a client application and a browser, and a shop server, a PID verification server, a license server, and a management system. It should be noted that the user, the client application, and the browser are collectively referred to as the "client", and the shop server, the PID verification server, the license server, and the management system are collectively referred to as the "license management apparatus". The processing shown in the sequence diagram is described below. Data communication between the entities is performed by executing encryption processing, for example, SSL encryption processing, on data, unless a secure communication channel is ensured.

At the client side, in order to play back the content recorded on the second data recording field 12 of the information recording medium (disk) 10 shown in Fig. 1, i.e., the encrypted content, the user specifies the content to be played back (step (1)). In actuality, an application is automatically started by setting a CD in a PC, as described with reference to Fig. 4, and the user can specify the content by setting the information recording medium, for example, a CD, in a corresponding drive (for example, a CD-RW drive).

The client application of the information processing apparatus, for example, a PC, reads various items of information such as a PID (see Fig. 2), a PID verification server URL, and a product ID from the information recording medium, for example, a CD, set in the PC (step (2)). As stated above, the PID is recorded on the PID (postscribed-ID) recording area 13 of the information recording medium 10 shown in Fig. 1. The PID contains a media ID assigned to each device as a unique identifier (ID) in a predetermined disk group unit, for example, a title unit, an album unit, a category unit, or a manufacturing lot unit and also contains other items of information, for example, version information. MAC (message authentication code) as the data-tampering verification code is added to the PID. The information such as the PID verification server URL and the product ID is stored in a definition file of a data file, which is recorded on the second data recording field 12, as described with reference to Fig. 4.

The client application then sends the obtained PID and product ID to the PID verification server based on the obtained PID verification server URL (step (3)).

Upon receiving the PID and the product ID from the client, the PID verification server executes MAC verification processing to verify whether the received ID is not tampered with (step (4)). The MAC verification processing is performed, for example, as follows. A MAC is generated as described with reference to Fig. 3 based on the received message (PID), and it is determined whether the generated MAC coincides with the MAC added to the received PID.

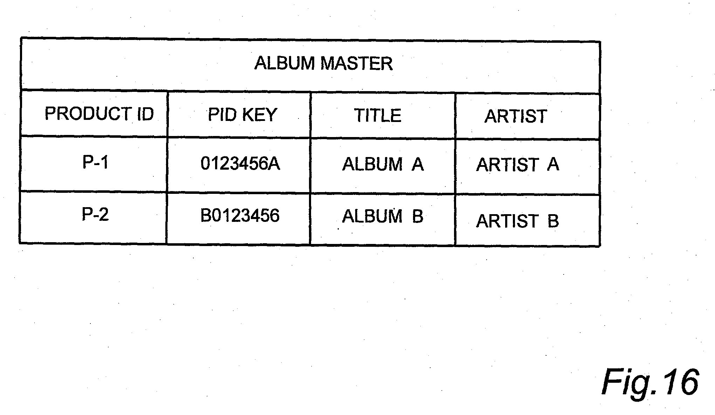

A key required for generating a MAC is obtained from an album master table by the PID verification server. An example of the configuration of the album master table is shown in Fig. 16. The album master table is formed as a table in which the product IDs, the PID keys used for performing MAC verification for the PIDs, title information and artist information corresponding to the content stored in the disk are associated with each other.

The PID verification server obtains the PID key as the MAC verification key from the album master table shown in Fig. 16 based on the product ID received from the client, and generates a MAC so as to verify the PID received from the client. When the generated MAC value is different from that added to the received PID, the PID verification server determines that the PID data is tampered with, and sends an error message to the client. Then, the subsequent license obtaining processing is not executed.

When the generated MAC value coincides with that added to the received PID, the PID verification server determines that the PID data is not tampered with, and sends the PID and the product ID to the management system (step (5)). Upon receiving the PID and the product ID from the PID verification server, the management system generates a transaction ID (TID) as ID data for a series of processing sequences (transactions) based on, for example, random numbers (step (6)).

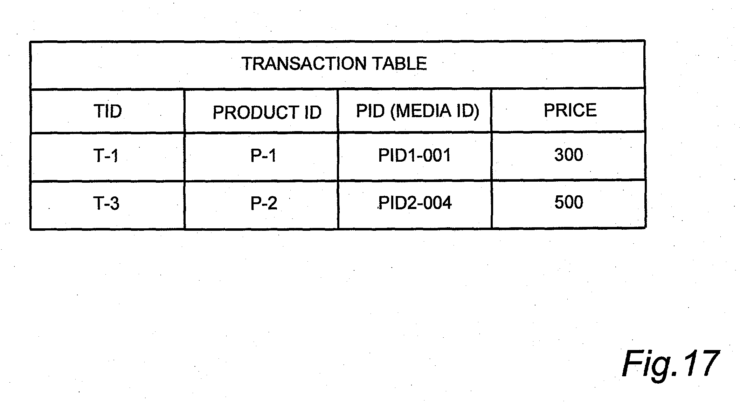

The management system generates a transaction table entry in which the product ID, the PID, the license price, and the content-usage price information are associated with the generated transaction ID, and stores the entry in the table (step (7)). An example of the configuration of the transaction table is shown in Fig. 17. As shown in Fig. 17, the transaction table is a table in which the product IDs, the media IDs of the PIDs, and the content usage prices as the license prices are associated with the transaction IDs as ID data for a series of processing sequences (transactions).

The content usage price for the content may be fixed as the license price. However, it may be varied according to the number of content usages, i.e., the number of license purchases.

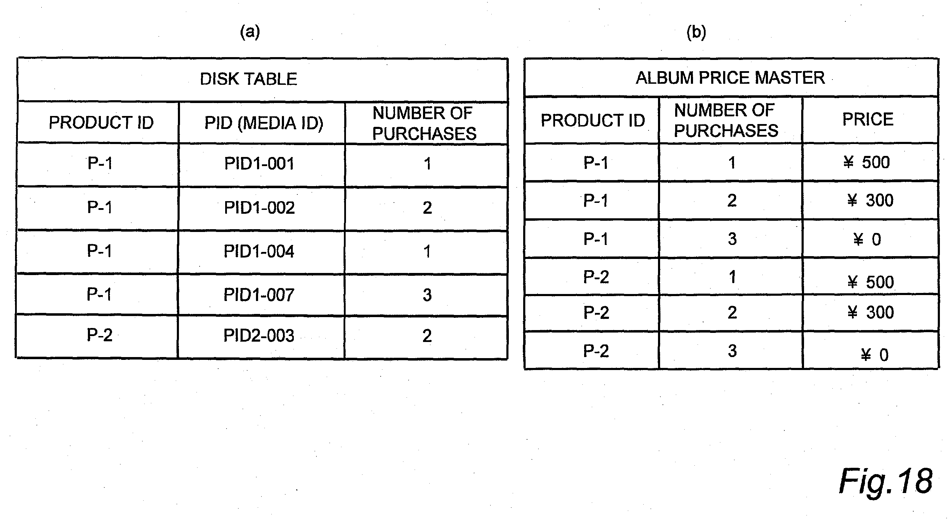

As described above, a combination of the product ID and the PID (media ID) is globally unique ID data. Accordingly, a disk table in which a combination of the product ID and the PID (media ID) and the number of purchases, i.e., the number of license issues based on a content usage request from the client, are associated with each other, for example, the disk table shown in Fig. 18(a), is set. Also, an album price master table in which the product ID, the number of purchases, and the price are associated with each other, such as the master shown in Fig. 18(b), is generated and stored in a database.

The disk table and the album price master table shown in Fig. 18 are set, and when there is a content usage request from a new client, the number of purchases in the past is checked based on the product ID and the PID (media ID) by referring to the disk table, and then, the price is determined based on the product ID and the number of purchases by referring to the album price master.

For example, when the product ID and the PID (media ID) provided from the client are the first entry [P-1, PID1-001] shown in Fig. 18(a), the number of purchases is found to be one. Since the purchase request made this time is the second time, the price is determined to be 300 yen from the product ID (P-1) and the number of purchases (2) by referring to the album price master table shown in Fig. 18(a). Additionally, the number of purchases of the first entry [P-1, PID1-001] of the disk table is updated as [+1].

The updating of the disk table and the setting of the price may be performed by the management system of the license management apparatus. Alternatively, it may be performed by one of the shop server, the PID verification server, and the license server. More specifically, the server obtains content usage information of the client based on ID data in response to a license obtaining request received from the client. The server then obtains license providing condition information from the album price master table based on the content usage information, and determines the license providing condition for the client based on the obtained license providing condition information. In the server or the management system, a processing program for determining the license providing condition is stored in a storage unit, and a controller, for example, a CPU, functions as license-providing-condition determining means.

There are various modes for setting prices. For example, the price may be set to be lower as the number of purchases for the same content becomes increased, and for a predetermined number of purchases, for example, three or more purchases, the price may be set to be free.

Not only the mode in which the price is changed according to the number of purchases, but also various modes in which services can be changed are possible. For example, various services according to the number of purchases can be provided. When, for example, a period-restricted license is set, the setting period may be set to be longer according to the number of purchases. Alternatively, free content may be provided according to the number of purchases.

The price information in the entries of the transaction table (Fig. 17) is the prices set by the management system by referring to the disk table and the album price master table shown in Fig. 18. This price setting processing may be executed by, for example, the PID server, and the set price information may be sent to the management system. Alternatively, required information may be sent from the management system to the shop server or the license server, and the price may be set in the shop server or the license server, and then, the set price information may be sent to the management system. Alternatively, the management system itself may determine the price by referring to the disk table and the album price master table shown in Fig. 18.

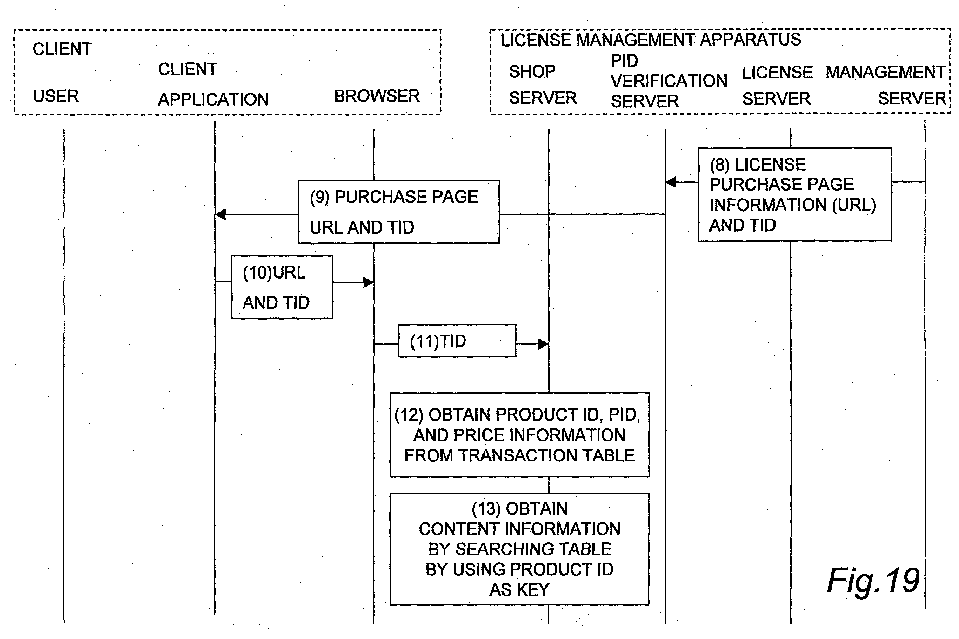

The processing continued from the sequence diagram shown in Fig. 15 is described below with reference to Fig. 19. Upon completion of generating the entry in the transaction table (Fig. 17) by the management system, the management system sends, together with the transaction ID (TID), license purchase page information (URL) required for playing back the content to the PID verification server (step (8)). The PID verification server then sends the license purchase page information (URL) and the transaction ID (TID) to the client application (step (9)).

The client application starts the browser based on the received URL (step (10)) so as to display the license purchase page provided by the shop server, and then sends the transaction ID (TID) to the shop server (step (11)).

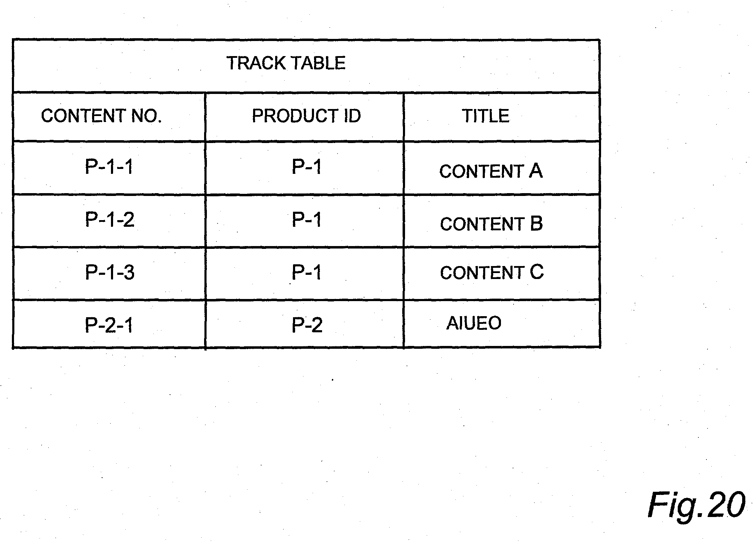

The shop server obtains the product ID, the PID (media ID), and the price information from the transaction table (see Fig. 17) based on the received transaction ID (TID) (step (12)). The shop server then obtains content title information from a track table in which the content Nos., the product IDs, and the content titles are associated with each other, as shown in Fig. 20, and also obtains content information, such as a corresponding album title and artist name, based on the product ID from the album master table (see Fig. 18(b)). The shop server generates a purchase page to be provided for the client based on the obtained information. The shop server generates a purchase page to be provided for the client based on the obtained information. The shop server possesses web-page generating/providing means so as to generate a purchase page as a web page and provides it for the client. Details of an example of the purchase page configuration are given below with reference to the drawings.

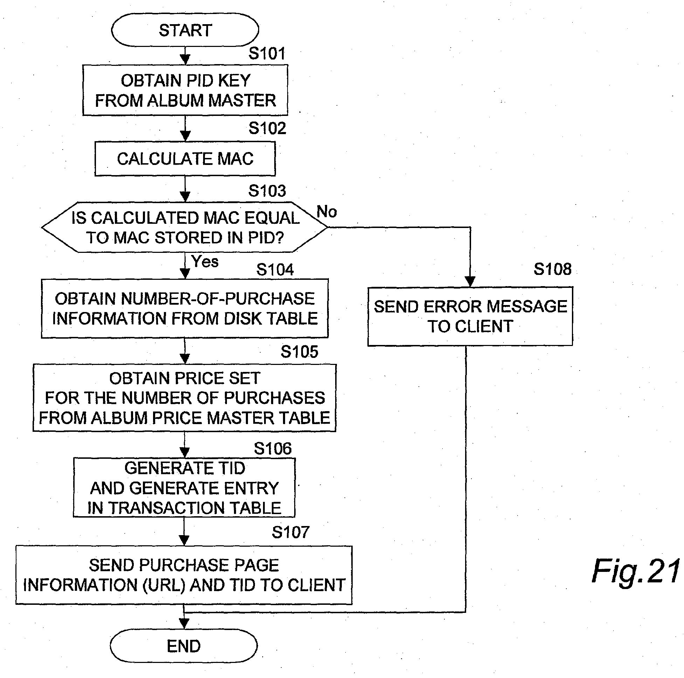

A series of processing performed by the license management apparatus from when a PID and a product ID are received from the client to when a purchase page is sent to the client is described below with reference to the flowchart of Fig. 21.

In step S101, based on the product ID received from the client, the corresponding PID key is obtained from the album master table (see Fig. 16). In step S102, the MAC value for the received PID is calculated by using the PID key.

In step S103, it is determined whether the calculated MAC value is equal to the MAC value stored in the received PID. If not, it is determined that the received PID is tampered with, and the process proceeds to step S108 in which an error message is sent to the client. The processing is then terminated.

If it is found that the calculated MAC is equal to the MAC stored in the PID, it is determined that the received PID is not tampered with. Then, in step S104, based on the [product ID and PID (media ID)] received from the client, the data indicating the number of purchases is obtained from the disk table (see Fig. 18(a)). In step S105, the price set for the number of purchases is obtained from the album price master table (see Fig. 18(b)) based on the product ID.

Subsequently, in step S106, a TID is generated, and an entry for the product ID, the PID (media ID), and the price associated with the TID is set in the transaction table (see Fig. 17).

Then, in step S107, content information is obtained from the album master and the track table, and the price information is obtained from the transaction table. Then, a purchase page having the price and content information is generated and is sent to the client together with the TID. The processing of each step shown in Fig. 21 is executed by the operations of the PID verification server and the other entities of the license management apparatus in cooperation with each other.

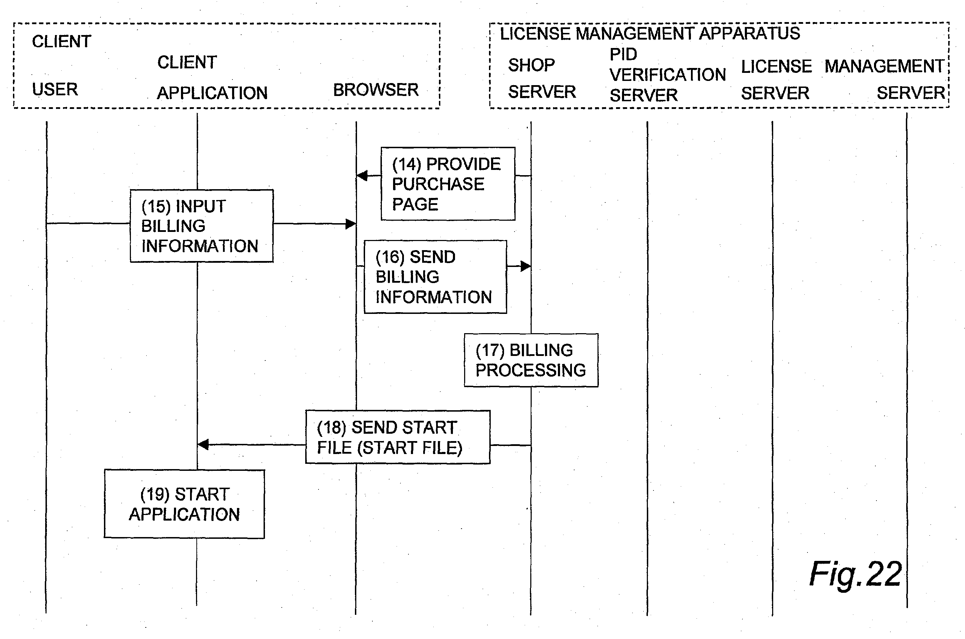

The license providing processing continued from the processing sequence shown in Fig. 19 is described below with reference to the processing sequence diagram of Fig. 22. The shop server generates a purchase page based on the above-described processing, and provides it for the browser of the client (step (14)).

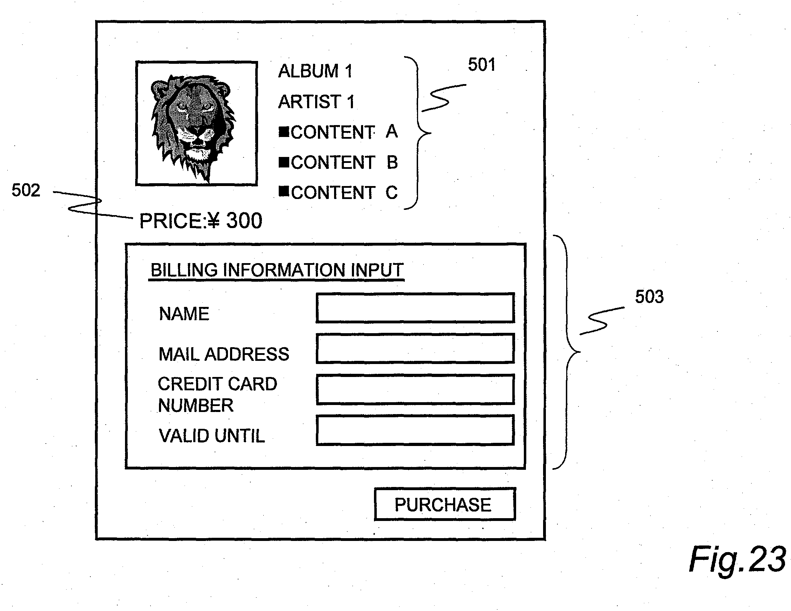

An example of the configuration of the purchase page to be provided for the browser of the client is shown in Fig. 23. The purchase page includes content information 501, price information 502, and a user input field 503 indicating items of information into which the user is requested to input. The content information 501 indicates information, which is set by the client, concerning the encrypted content recorded on the second data recording field of an information recording medium (see Fig. 1), for example, a CD. For the price information 502, if the price is changed according to the number of purchases, the price set for a current number of purchases is provided.

The client displays a purchase page, such as that shown in Fig. 23, and inputs data required for billing processing, for example, the name, the mail address, the credit card number, and the valid period of the credit card (step (15)). The client then sends the input information to the shop server via the browser (step (16)).

Upon receiving the billing information, the shop server performs billing processing based on the received information (step (17)). More specifically, the shop server connects to a billing agent, for example, a banking agency providing on-line billing services, and checks whether the credit card number provided by the client is valid and authorized, and whether the balance on a user's account is sufficient for performing billing. The shop server then withdraws money equivalent to the purchase fee from the designated account in the billing agent or performs account transfer processing. The shop server then receives a billing completion message from the billing agent.

Upon completion of the billing processing, the shop server generates a start file for starting a content usage (playback processing) program by the client application, and sends the start file to the client application via the browser of the client.

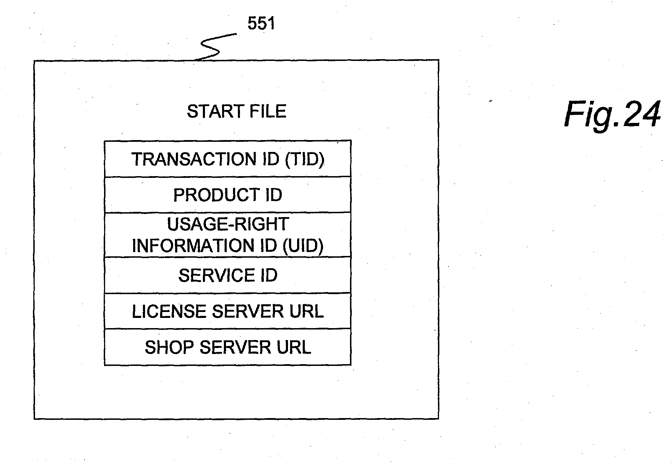

An example of the start file is described below with reference to Fig. 24. A start file 551 contains the transaction ID (TID) previously generated by the management system, the content ID (CID) to be used and played back by the client, the usage-right information ID (UID) generated by the management system, the service ID, the license server URL, and the shop server URL.

The client application starts an application according to the start file received from the shop server (step (19)).

As the application start processing performed by the client application, it is first determined whether service data associated with the service ID set in the start file (see Fig. 24) is stored in the information processing apparatus, which serves as the client system.

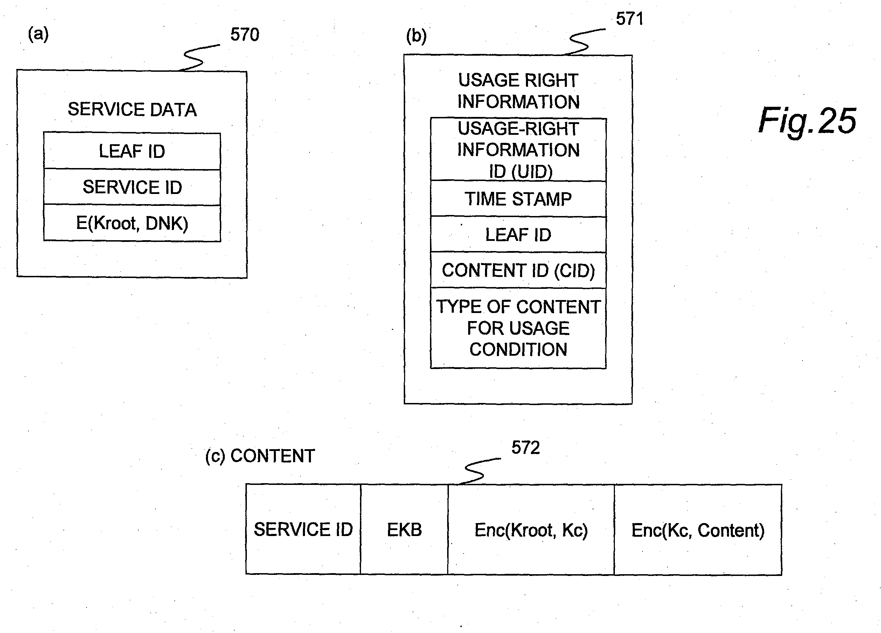

The service data is data received from a license server when the client wishes to receive various services, for example, a content usage service. For example, the service data allows the client to receive a service usage right for a service package provided by a specific service provider. Fig. 25(a) illustrates an example of the data configuration of the service data.

As shown in Fig. 25(a), service data 570 contains the leaf ID unique to the client, which is set in an EKB distribution tree, the service ID as a service identifier, and data E(Kroot, DNK) generated by encrypting the device node key (DNK) with the root key (Kroot). To receive the service data, the client is required to register in the license server.

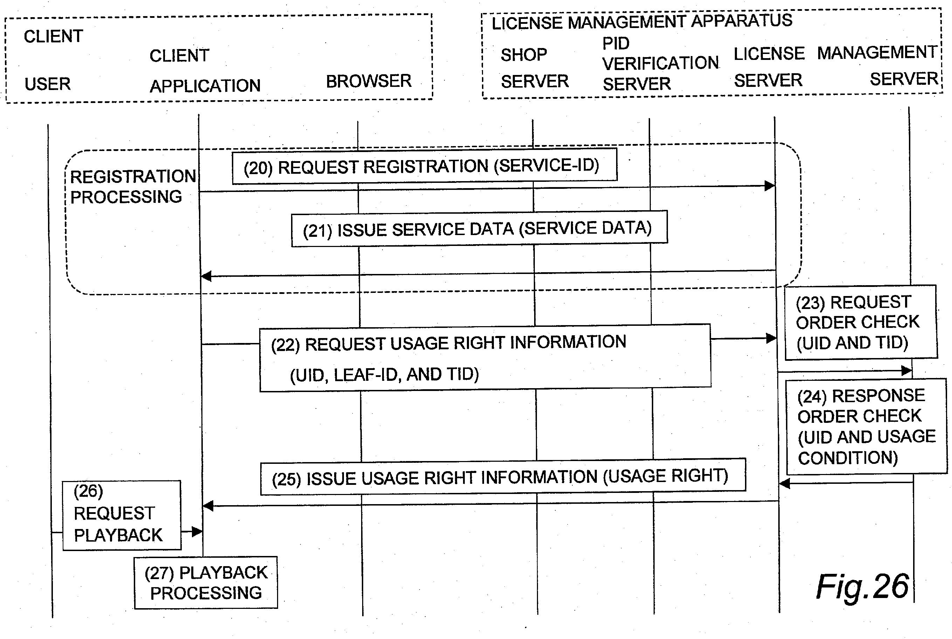

The registration processing corresponds to processing steps (20) and (21) shown in Fig. 26. If it is determined that the client does not possess service data associated with the service ID, the client performs the registration processing in steps (20) and (21) so as to receive the service data from the license server. This registration processing is not necessary when the client possesses service data associated with the service ID.

After performing the registration processing, the client then obtains usage right information as a license for the content to be used (played back) from the license server.

An example of the data configuration of the usage right information is shown in Fig. 25(b). As shown in Fig. 25(b), in usage right information 571, the usage-right information ID as a usage-right information identifier, the time stamp as the issuance time and date information, the leaf ID unique to the client, the content ID and the content type information for the usage condition if the usage right is for the content. As the content ID, encrypted individual content IDs stored in the second data storage area of the information recording medium shown in Fig. 1 may be listed, or the product ID may be set.

In content 572, i.e., in the content recorded on the second recording field 12 of the information recording medium 10 shown in Fig. 1, content data (Enc(Kc, Content)) encrypted with the content key [Kc], and content key data (Enc(Kroot, Kc)) encrypted with the root key [Kroot], the EKB that can be decrypted only by the users having an authorized usage right to obtain the root key [Kroot], and the service ID are stored.

A sequence for obtaining usage right information performed as the license obtaining processing is now described with reference to the sequence diagram of Fig. 26.

The client sends a request to obtain usage right information for the content to be played back or used to the license server (step (22)). This request contains the usage-right information ID (UID) contained in the start file (see Fig. 24) previously received from the shop server, the leaf ID as the client ID data, and the transaction ID (TID) contained in the start file (see Fig. 24) previously received from the shop server.

Upon receiving a request to obtain the usage right information, the license server requests the management system to perform order check processing (step (23)). This request contains the usage-right information ID (UID) and the transaction ID (TID). Upon receiving the order check request, the management server sends response information indicating usage conditions in response to the usage-right information ID (UID) as an order check response to the license server (step (24)).

Upon receiving the response information, the license server generates usage right information indicating the content usage conditions, and issues the information to the client (step (25)). The content usage conditions are information indicating permission for various types of processing, for example, the number of content playback operations, the period, restrictions on copies, and restrictions on checkouts for external devices.

After receiving the usage right information, the client is able to use the content previously received from the content server based on the usage conditions recorded on the usage right information. In response to a content playback request (step (26)) by designating the content ID (CID) and the usage-right information ID from the user, the client application plays back the content according to the usage conditions (step (27)).

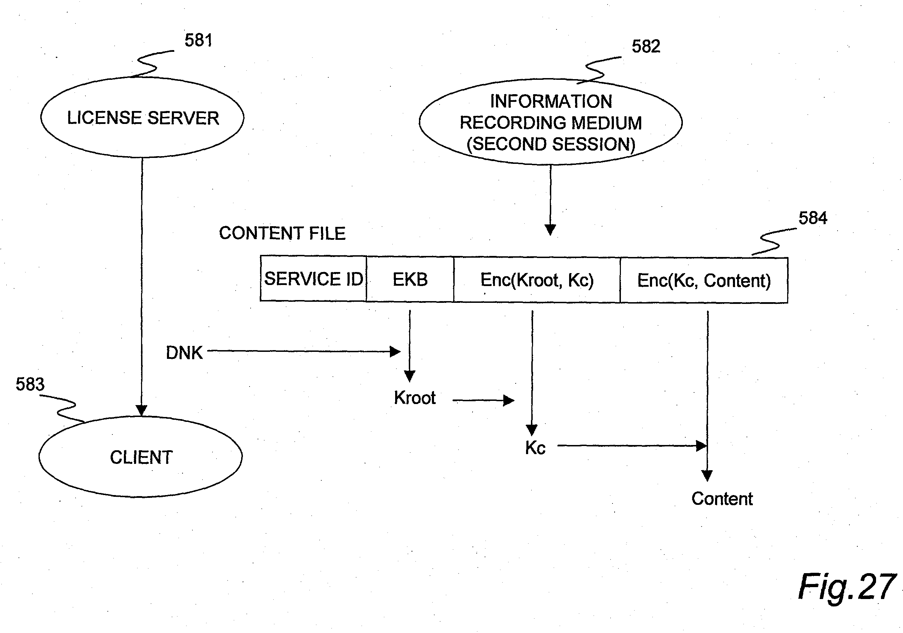

A basic process for the content playback processing is described below with reference to Fig. 27. A content file 584 including the encrypted content is read from a second data storage area (second session) 582 of the information recording medium shown in Fig. 1. Then, service data and usage right information are supplied from a license server 581 to a client 583 as a license, and the client 583 decrypts the encrypted content in the content file 584 by using the service data and the usage right information.

The content (Enc(Kc, Content)) included in the content file 584 is encrypted with the content key Kc, and the content key Kc is a key obtained from the root key Kroot that can be acquired from the EKB.

The client 583 obtains the device node key (DNK) from the service data received from the license server, and decrypts the EKB of the content file based on the obtained DNK, thereby obtaining the root key Kroot. By using the obtained root key Kroot, the client 583 decrypts the Enc(Kroot, Kc) so as to obtain the content key Kc. By using the obtained content key Kc, the client 583 decrypts the encrypted content Enc(Kc, Content) so as to play back the content.

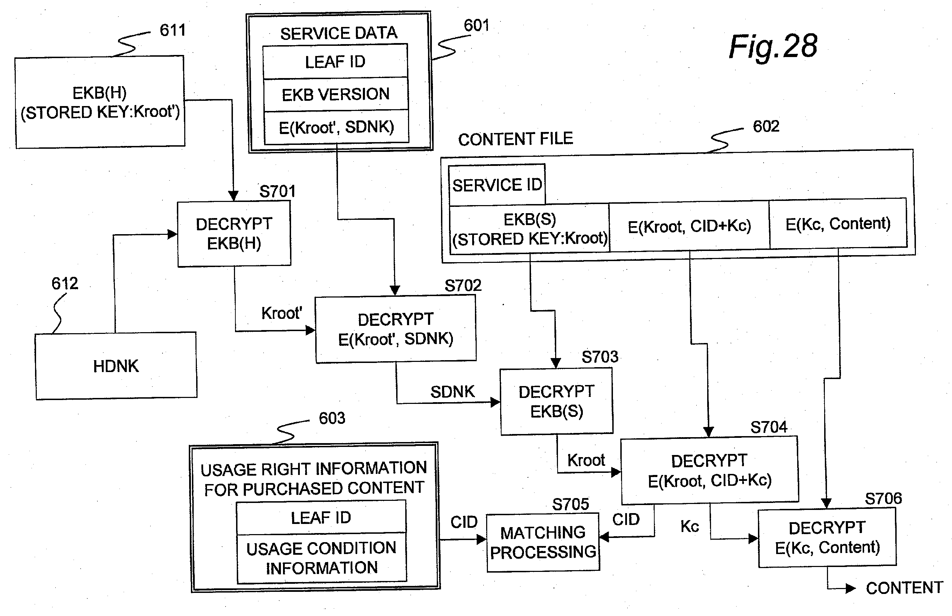

Details of the content playback processing in association with the service data and the usage right information are given below with reference to Fig. 28.

Fig. 28 is a content usage sequence based on the content decryption processing using a hardware EKB[EKB(H)] and a service EKB[EKB(S)].

Service data 601 and usage right information 603 shown in Fig. 28 are data received from the license server, and an encrypted content file 602 is data read from the second data storage area (second session) of the information recording medium shown in Fig. 1. The service data 601 stores the leaf ID as the leaf identifier, the EKB version, and data E(Kroot', SDNK) generated by encrypting the service device node key (SDNK) required for decrypting the service EKB[EKB(S)] with the root key Kroot' set based on a hardware category tree.

The encrypted content file 602 is a file containing the service EKB [EKB(S)] storing the root key Kroot set based on a service category tree, data E(Kroot, CID+Kc) generated by encrypting the content ID (CID) and the content key (Kc) used for encrypting and decrypting the content by using the root key Kroot, and data E(Kc, Content) generated by encrypting the content with the content key Kc.

The usage right information 603 is data storing the leaf ID and the content usage-right condition information. The content usage-right condition information includes various usage conditions set for the content, for example, the usage period, the number of usages, and copy restrictions. Upon receiving the usage right information 603, the user device stores the usage right information as security information for the content or as the content index data in an AV index file set for the playback device (for example, a PC).

For a user device, for example, a PC, having large-capacity storage means and a high performance processor, the usage right information can be stored as the security information for the content. In this case, it is preferable that the user device performs processing when using the content by referring to all the items of usage right information. In contrast, for a user device, for example, a portable device (PD), having a low performance processor without having large-capacity storage means, usage right information 403 consisting of selected items of information can be stored in an AV index file as the content index data, and performs processing when using the content by referring to the usage condition information stored in the AV index file.

In step S701 of Fig. 28, the user device decrypts a hardware EKB(H) 611 by using a hardware device node key (HDNK) 612 so as to obtain the root key Kroot' set based on a hardware category tree from the EKB(H) 611. EKB processing by using a DNK is performed according to the method described with reference to Fig. 9.

Then, in step 5702, the user device decrypts the encrypted data E(Kroot', SDNK) in the service data 601 by using the root key Kroot' extracted from the EKB(H), thereby obtaining the device node key (SDNK) used for processing (decrypting) the service EKB[EKB(S)].

Then, in step S703, the user device processes (decrypts) the service EKB[EKB(S)] stored in the encrypted content file 602 by using the device node key (SDNK) extracted from the service data, thereby obtaining the root key Kroot set based on the service category tree stored in the service EKB[EKB(S)].

In step S704, the user device then decrypts the encrypted data E(Kroot, CID+Kc) stored in the encrypted content file 602 by using the root key Kroot extracted from the service EKB[EKB(S)], thereby obtaining the content ID (CID) and the content key (Kc).

Subsequently, in step S705, the user device performs matching (verification) on the content ID (CID) extracted from the encrypted content file 602 and the content ID stored in the usage right information. If the use of the content is verified as a result of matching processing, in step S706, the user device decrypts the encrypted content E(Kc, Content) stored in the encrypted content file 602 by using the content key (Kc) extracted from the encrypted content file 602.

As described above, a hardware EKB[EKB(H)] as an EKB based on a category tree formed for hardware, which serves as content usage devices, and a service EKB[EKB(S)] as an EKB based on a category tree set for content usage services are individually provided for the users, and only the users having an authorized DNK for each EKB is allowed to use the service.

The DNK for decrypting the service EKB[EKB(S)], i.e., the SDNK, can be provided as the service data 601 for the content. The SDNK is encrypted by using the root key Kroot' which is set based on the hardware category tree that can be obtained only by the devices having an authorized hardware DNK, i.e, the HDNK. Accordingly, only the user devices having an authorized HDNK can obtain the SDNK to use the service.

In the use of the content, matching is performed on the content identifier (CID) obtained from the encrypted content file 602 and the CID obtained from the usage right information. Accordingly, obtaining the usage right information 603 and extracting the CID information from the usage right information 603 can be an essential condition for a content playback process. Thus, the content can be used according to the usage conditions.

The present invention has been described in detail with reference to what is presently considered to be the preferred embodiment. It is apparent, however, that modifications and alternatives may be made by those who skilled in the art without departing from the spirit and scope of the present invention. That is, the present invention has been disclosed by way of examples only, and is not restricted to the embodiment. In order to understand the gist of the present invention, the claims recited at the beginning of the specification should be considered.

The above-described series of processing disclosed in the specification may be executed by hardware, software, or a combination of hardware and software. If software is used, a program having the processing sequences recorded thereon may be installed into a memory of a computer integrated into dedicated hardware, or may be installed into a general-purpose computer which can execute various types of processing. Then, the program can be executed.

The program may be prerecorded on, for example, a hard disk or a ROM (read only memory) as a storage medium. Alternatively, the program may be temporarily or permanently stored (recorded) in a removable recording medium, for example, a flexible disk, a CD-ROM (compact disc read only memory), a MO (magneto optical) disk, a DVD (digital versatile disc), a magnetic disk, or a semiconductor memory. Such a removable recording medium can be provided as so-called "package software".

The program may be installed from the above-described removable recording medium to a computer. Alternatively, the program may be wirelessly transferred from a download site to a computer, or may be transferred to the computer by wired means via a network, for example, a LAN (local area network) or the Internet. Then, the computer can receive the program transferred as described above, and installs it into a storage medium, for example, a built-in hard disk.

Various types of processing disclosed in the specification may be executed in chronological order as disclosed in the specification. Alternatively, they may be executed concurrently or individually according to the performance of a device executing the processing or according to the necessity.

### Industrial Applicability

As described above, according to the configuration of the present invention, a condition for providing a license as a content usage right for a client is dynamically set based on client's content usage status data. Thus, flexible services can be provided, for example, a license providing fee can be decreased or a license can be provided free for clients having a large number of content usages.

According to the configuration of the present invention, for providing a license for a usage right of the content stored in an information recording medium, globally unique data indicating a combination of a media ID, stored in the information recording medium, as the identifier unique to the information recording medium and a product ID as the identifier set for each product corresponding to a group of a plurality of information recording media is received from a client. Based on such ID data, the content usage status data is checked. Thus, licenses can be provided under the reliable management of the content usage.

According to the configuration of the present invention, a license provided by the license management apparatus is a usage right of encrypted content contained in a content file owned by a user. Service data storing a device node key (DNK) required for processing an enabling key block (EKB) is provided as license information. Thus, a strict management of the content usage associated with services can be implemented.

## Claims

1. A license management apparatus for setting a condition for providing a license as a content usage right, comprising:
a disk table in which data indicating content usage statuses of clients is stored;
an album price master table in which information concerning license providing conditions according to the content usage statuses is stored; and
license providing condition determining means for obtaining information concerning a content usage of a client from the disk table based on identification data accompanying a license obtaining request received from the client, and for obtaining information concerning a license providing condition from the album price master table based on the content usage information so as to determine the license providing condition for the client based on the information concerning the license providing condition.

2. A license management apparatus according to claim 1, wherein:
the license obtaining request received from the client is a request to obtain a license corresponding to a usage right of content stored in an information recording medium, and the identification data accompanying the license obtaining request is a combination of a media ID, stored in the information recording medium, as an identifier unique to the information recording medium and a product ID as an identifier set for each product corresponding to a group of a plurality of information recording media; and
the disk table stores the content usage status data corresponding to the media ID and the product ID.

3. A license management apparatus according to claim 1, wherein the information concerning the license providing conditions is information concerning license providing prices, and the album price master table stores the information concerning the license providing prices according to the content usage statuses.

4. A license management apparatus according to claim 1, wherein:
the information concerning the license providing conditions is information concerning license providing prices;
the content usage status is the number of purchases as the number of purchases obtained for the content;
the disk table stores data indicating the number of content purchases as the content usage status data corresponding to the media ID and the product ID;
the album price master table stores the information concerning the license providing prices according to the number of content purchases; and
the license providing condition determining means determines the different license providing prices according to the number of content purchases by the client.

5. A license management apparatus according to claim 1, further comprising web-page generating/providing means for generating a web page containing the information concerning the license providing condition determined by the license providing condition determining means and content information, and for providing the web page for the client.

6. A license management apparatus according to claim 1, wherein:
a license provided by the license management apparatus is a usage right of encrypted content contained in a content file owned by a client;
the content file includes content data (Enc(Kc, Content)) encrypted with a content key [Kc], content key data (Enc (Kroot, Kc)) encrypted with a root key [Kroot], and an enabling key block (EKB) used for obtaining the root key [Kroot] by performing decryption processing using a device node key (DNK) stored in service data as license data; and
the license provided by the license management apparatus contains the service data storing the device node key (DNK) therein.

7. A license management apparatus according to claim 1, wherein the license management apparatus verifies a MAC as tampering verification data added to the identification data accompanying the license obtaining request received from the client, and issues a license on the condition that the identification data is not tampered with.

8. A license management method for setting a condition for providing a license as a content usage right, comprising:
an identification data receiving step of receiving identification data accompanying a license obtaining request from a client;
a content usage information obtaining step of obtaining information indicating a content usage of the client from a disk table in which data indicating content usage statuses of clients is stored;
a license providing condition information obtaining step of obtaining, based on the content usage information, information indicating a license providing condition from an album price master table in which information indicating license providing conditions according to the content usage status is stored; and
a license providing condition determining step of determining the license providing condition for the client based on the obtained information concerning the license providing condition.

9. A license management method according to claim 8, wherein:
the license obtaining request received from the client is a request to obtain a license corresponding to a usage right of content stored in an information recording medium, and the identification data accompanying the license obtaining request is a combination of a media ID, stored in the information recording medium, as an identifier unique to the information recording medium and a product ID as an identifier set for each product corresponding to a group of a plurality of information recording media; and
the content usage information obtaining step obtains the content usage status data from the disk table based on the media ID and the product ID.

10. A license management method according to claim 8, wherein the information concerning the license providing conditions is information concerning license providing prices, and the license providing condition information obtaining step obtains the information concerning the license providing price according to the content usage status from the album price master table.

11. A license management method according to claim 8, wherein:
the information concerning the license providing conditions is information concerning license providing prices;
the content usage status is the number of purchases as the number of purchases obtained for the content;
the content usage information obtaining step obtains data indicating the number of content purchases as the content usage status data from the disk table based on the media ID and the product ID;
the license providing condition information obtaining step obtains the information concerning the license providing price according to the number of content purchases from the album price master table; and
the license providing condition determining step determines the different license providing prices according to the number of content purchases by the client.

12. A license management method according to claim 8, further comprising a web-page generating/providing step of generating a web page containing the information concerning the license providing condition determined in the license providing condition determining step and content information, and of providing the web page for the client.

13. A license management method according to claim 8, wherein:
the license is a usage right of encrypted content contained in a content file owned by a client;
the content file includes content data (Enc(Kc, Content)) encrypted with a content key [Kc], content key data (Enc (Kroot, Kc)) encrypted with a root key [Kroot], and an enabling key block (EKB) used for obtaining the root key [Kroot] by performing decryption processing using a device node key (DNK) stored in service data as license data; and
the license management method further comprises a step of generating the service data storing the device node key (DNK) therein and of providing the service data for the client.

14. A license management method according to claim 8, further comprising a step of verifying a MAC as tampering verification data added to the identification data accompanying the license obtaining request received from the client, and a license is issued on the condition that the identification data is not tampered with.

15. A computer program in which a processing program for executing license management processing for setting a condition for providing a license as a content usage right is indicated, the computer program comprising:
an identification data receiving step of receiving identification data accompanying a license obtaining request from a client;
a content usage information obtaining step of obtaining information indicating a content usage of the client from a disk table in which data indicating content usage statuses of clients is stored;
a license providing condition information obtaining step of obtaining, based on the content usage information, information indicating a license providing condition from an album price master table in which information indicating license providing conditions according to the content usage status is stored; and
a license providing condition determining step of determining the license providing condition for the client based on the obtained information concerning the license providing condition.
